# EUROPEAN PATENT APPLICATION

(11) **EP 2 746 923 A1**
(43) Date of publication of application: **25.06.2014**
(21) Application number: 13191258.6
(22) Date of filing: 01.11.2013
(51) Int. Cl.: G06F 3/0488, G06F 1/16, G06F 3/01, G06F 3/048, G06F 3/042, H04M 1/725

(54) **System and method for providing image related to image displayed on device**

(30) Priority: 02.11.2012 KR 20120123754
(71) Applicant: Samsung Electronics Co., Ltd, Gyeonggi-do 443-742 (KR)
(72) Inventor: Cheon, Ka-won, Seoul (KR); Moon, Choon-kyoung, Gyeonggi-do (KR); Park, Da-hye, Gyeonggi-do (KR); Eun, Dong-jin, Gyeonggi-do (KR); Lee, Sang-il, Gyeonggi-do (KR)
(74) Representative: Birchenough, Lewis

(57) **Abstract**

A system and a method for providing an image related to an image displayed on a device are provided. A method of providing a second image that is related to a first image displayed on a device includes receiving a request for the second image that is related to the first image displayed on a screen of the device, from a server, and providing the second image to the server in response to the request, wherein the second image is projected onto a plate on which the device is disposed, by a projection apparatus connected to the server, and wherein the first image displayed on the screen of the device is a part of a whole image related to the first image displayed on the screen of the device, and wherein the second image includes another part of the whole image.

## Description

### CROSS-REFERENCE TO RELATED PATENT APPLICATION(S)

This application claims the benefit under 35 U.S.C. § 119(a) of Korean patent application filed on November 2, 2012 in the Korean Intellectual Property Office and assigned Serial No. 10-2012-0123754, the entire disclosure of which is hereby incorporated by reference.

### TECHNICAL FIELD

The present disclosure relates to a system and method for displaying, on a plate, an image related to an image displayed on a device that is put on the plate.

### BACKGROUND

Due to the development of devices including central processing apparatuses and multimedia technologies, a device may execute various types of programs and may display various types of images on a screen. However, if the screen of the device is not sufficiently large, various types of images provided by the device may not be easily displayed on one screen. Also, if an image provided by the device is excessively large, then the whole image may not be easily displayed on the screen of the device. Accordingly, there is a demand for a technology for allowing a user to efficiently use at least one image provided by a device.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a system and method for providing an image related to an image displayed on a device so as to display, on a plate, an expansion image related to the image displayed on the device that is disposed on the plate.

Another aspect of the present disclosure is to provide a system and method for providing an image related to an image displayed on a device so as to change an expansion image related to the image displayed on the device, based on at least one of a user input on the device and a user input on the expansion image.

Another aspect of the present disclosure is to provide a system and method for providing an image related to an image displayed on a device so as to display, on an external device, an expansion image related to the image displayed on the device that is disposed on the external device.

In accordance with an aspect of the present disclosure, a method of providing a second image that is related to a first image displayed on a device is provided. The method includes receiving a request for the second image that is related to the first image displayed on a screen of the device, from a server, and providing the second image to the server in response to the request, wherein the second image is projected onto a plate on which the device is disposed, by a projection apparatus connected to the server, and wherein the first image displayed on the screen of the device is a part of a whole image related to the first image displayed on the screen of the device, and wherein the second image comprises another part of the whole image.

In accordance with another aspect of the present disclosure, a device is provided. The device includes a memory configured to store at least one program, and a processor configured to provide an expansion image to a server by executing the at least one program, wherein the at least one program is configured to receive a request for a second image that is related to a first image displayed on a screen of the device, from the server, and provide the second image to the server in response to the request, wherein the second image is projected onto a plate on which the device is disposed, by a projection apparatus connected to the server, wherein the first image displayed on the screen of the device is a part of a whole image related to the first image displayed on the screen of the device, and wherein the second image comprises another part of the whole image.

In accordance with another aspect of the present disclosure, a non-transitory computer-readable recording medium storing instructions that, when executed, cause at least one processor to perform the above method is provided.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 is a schematic diagram of an expansion image providing system according to an embodiment of the present disclosure;

FIG. 2 is a flowchart of a method of displaying an expansion image related to an image displayed on a device in an expansion image providing system according to an embodiment of the present disclosure;

FIG. 3 is a flowchart of a method of generating an expansion image by a device according to an embodiment of the present disclosure;

FIG. 4 is a flowchart of a method of changing and displaying an expansion image and an image displayed on a device, in an expansion image providing system according to an embodiment of the present disclosure;

FIGS. 5A, 5B, 5C, and 5D are images showing examples of a user input on a device according to an embodiment of the present disclosure;

FIG. 6 is an image showing a user input on an expansion image according to an embodiment of the present disclosure;

FIGS. 7A, 7B, and 7C are images showing an example that an expansion image is moved on a plate when a device is moved on the plate according to an embodiment of the present disclosure;

FIGS. 8A and 8B are images showing an example that an image displayed on a device is changed when a device is moved on a plate according to an embodiment of the present disclosure;

FIGS. 9A and 9B are images showing an example that an expansion image is rotated when a device is rotated on a plate according to an embodiment of the present disclosure;

FIGS. 10A and 10B are images showing an example that an expansion image and an image displayed on a device are changed based on a touch input of a user on a device according to an embodiment of the present disclosure;

FIGS. 11A and 11B are images showing an example that an expansion image and an image displayed on a device are reduced in size based on a touch input of a user on a device according to an embodiment of the present disclosure;

FIGS. 12A and 12B are images showing an example that an expansion image and an image displayed on a device are changed based on a touch input of a user on the expansion image according to an embodiment of the present disclosure;

FIGS. 13A and 13B are images showing an example that an expansion image and an image displayed on a device are reduced in size based on a touch input of a user on the expansion image according to an embodiment of the present disclosure;

FIGS. 14A, 14B, 14C, 14D, and 14E are images showing an example that a map image is displayed on an expansion image according to an embodiment of the present disclosure;

FIGS. 15A, 15B, and 15C are images showing an example that photo images displayed on a screen of another device are moved onto an expansion image that is a map image according to an embodiment of the present disclosure;

FIGS. 16A, 16B, and 16C are images showing an example that photo images displayed on a screen of another device are moved onto an expansion image and then one of the photo images is enlarged and displayed according to an embodiment of the present disclosure;

FIGS. 17A, 17B, and 17C are images showing an example that a street view image is displayed on a screen of a device when an expansion image is a map image according to an embodiment of the present disclosure;

FIGS. 18A, 18B, and 18C are images showing an example that a street view image is displayed near a device when an expansion image is a map image according to an embodiment of the present disclosure;

FIGS. 19A, 19B, and 19C are images showing an example that a route is displayed based on user inputs on a device and an expansion image when the expansion image is a map image according to an embodiment of the present disclosure;

FIGS. 20A, 20B, 20C, and 20D are images showing an example that a start point and an end point for route guidance are input based on a user input when an expansion image is a map image according to an embodiment of the present disclosure;

FIGS. 21A, 21B, and 21C are images showing an example that a start point for route guidance is changed based on a user input when an expansion image is a map image according to an embodiment of the present disclosure;

FIGS. 22A, 22B, and 22C are images showing an example that a plurality of home pages of a device are displayed on an expansion image according to an embodiment of the present disclosure;

FIGS. 23A, 23B, and 23C are images showing an example that an expansion image is displayed in an edit mode for editing home pages of a device according to an embodiment of the present disclosure;

FIGS. 24A, 24B, 25A, 25B, 25C, 26A, 26B, 26C, and 26D are images showing examples that home pages included in an expansion image are edited in an edit mode for editing the home pages of a device according to various embodiments of the present disclosure;

FIG. 27 is an image showing an example that predetermined web pages are included in an expansion image according to an embodiment of the present disclosure;

FIG. 28 is an image showing an example that information about global time is included in an expansion image according to an embodiment of the present disclosure;

FIG. 29 is an example that a result of dictionary search is displayed on an expansion image according to an embodiment of the present disclosure;

FIG. 30 is an image showing an example that an address book is displayed on a screen of a device and information about a user selected on the address book is included in an expansion image according to an embodiment of the present disclosure;

FIG. 31 is an image showing an example that a page of a webtoon is displayed on a screen of a device and other pages of the webtoon are included in an expansion image according to an embodiment of the present disclosure;

FIGS. 32A, 32B, and 32C are images showing an example that a plurality of memos are displayed on an expansion image according to an embodiment of the present disclosure;

FIGS. 33A and 33B are images showing an example that photo images stored in a device are displayed on an expansion image according to an embodiment of the present disclosure;

FIG. 34 is an image showing an example that a list of music files accessible by a device is displayed on an expansion image according to an embodiment of the present disclosure;

FIGS. 35 and 36 are images showing examples that a calendar image is displayed on an expansion image according to various embodiments of the present disclosure;

FIG. 37 is a block diagram of a device according to an embodiment of the present disclosure;

FIG. 38 is a block diagram of a device according to another embodiment of the present disclosure;

FIG. 39 is a block diagram of a server according to an embodiment of the present disclosure;

FIG. 40 is a schematic diagram of an expansion image providing system according to another embodiment of the present disclosure; and

FIG. 41 is a flowchart of a method of displaying an expansion image related to an image displayed on a device, on an external device in an expansion image providing system according to another embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Throughout the specification, it will be understood that when an element is referred to as being "connected with" another element, it can be directly connected with the other element, or electrically connected with the other element while intervening elements may also be present. Also, when a part "includes" or "comprises" an element, unless there is a particular description contrary thereto, the part can further include other elements, not excluding the other elements.

In the present specification, an expansion image is an image related to an image displayed on a screen of a device, and may be an image that is not easily displayable on the screen of the device due to a small size of the screen of the device. The image displayed on the screen of the device may be a part of a predetermined whole image, and the expansion image to be displayed on a plate may include the other part of the whole image.

A tap denotes an operation that a user very rapidly touches an image by using a finger or a touch tool, for example, a stylus or any other similar and/or suitable input device or input tool. In other words, it denotes a case when a difference between a touch-in time, which is when a finger or a touch tool contacts a screen, and a touch-out time, which is when the finger or the touch tool is separated from the screen is very small and is less than a threshold period of time.

A long tap denotes an operation that a user touches an image by using a finger or a touch tool, for example, a stylus or any other similar and/or suitable input device or input tool, and continues the touch for more than a threshold period of time. In other words, it denotes a case when a difference between a touch-in time and a touch-out time is greater than a threshold period of time.

A double tap denotes an operation that a user rapidly touches an image twice by using a finger or a touch tool.

A drag denotes an operation that a user touches an image by using a finger or a touch tool and moves the finger or the touch tool to another location of the image while continuing the touch.

A flick denotes an operation that a user very rapidly makes a drag by using a finger or a touch tool. A drag and flick may be identified based on whether the speed of the finger or the touch tool is greater than a threshold speed.

A pinch denotes an operation that a user touches an image by using a plurality of fingers or touch tools, and then increases or decreases a distance between the fingers or touch tools. An operation that the user contacts an index finger and a thumb on a screen and then increases a distance there between is denoted as unpinching, and an operation that the user decreases the distance there between is denoted as pinching. An example of using a pinch is that an image is zoomed in due to an unpinching input and is zoomed out due to a pinching input.

An object denotes an item included in an image that may be displayed on a device or an expansion image that may be displayed on a plate, wherein the object is selectable due to a user input. The object may include, but is not limited to, an icon, a folder, a shortcut, an image, a thumbnail image, or any other element that may be displayed on a device.

An image includes a result that a predetermined program is executed by a device or a server 2000.

Expressions such as "at least one of," when preceding a list of elements, modify the entire list of elements and do not modify the individual elements of the list.

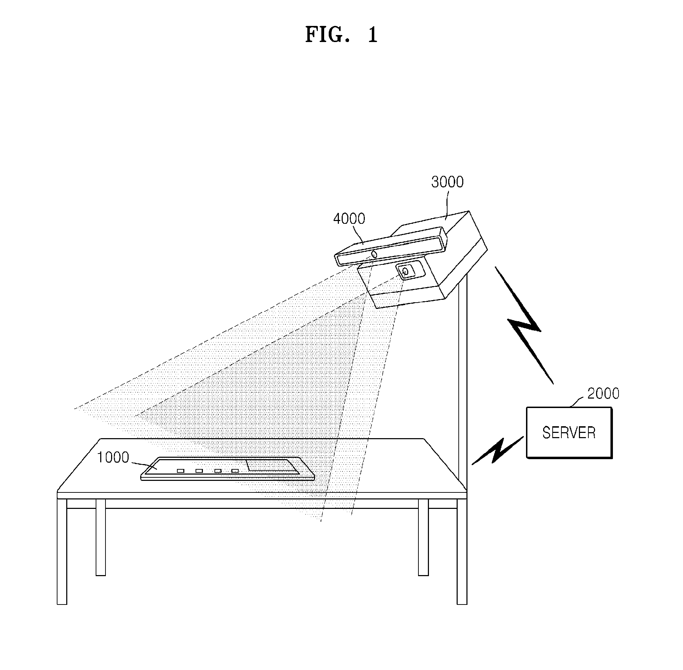

FIG. 1 is a schematic diagram of an expansion image providing system according to an embodiment of the present disclosure.

Referring to FIG. 1, the expansion image providing system, according to an embodiment of the present disclosure, includes a device 1000, a server 2000, a projection apparatus 3000, and a photographing apparatus 4000.

The device 1000 may be put on a plate larger than a screen of the device 1000, and an expansion image, which is related to an image displayed on the device 1000, may be displayed by the projection apparatus 3000 on the plate upon which the device 1000 is disposed. The expansion image is an image related to an image displayed on the screen of the device 1000, and may be an image that is not easily displayable on the screen of the device 1000 due to a small size of the screen of the device 1000. The image displayed on the screen of the device 1000 may be a part of a predetermined whole image, and the expansion image displayed on the plate may include the other part of the whole image. For example, if the image displayed on the device 1000 is a map image, then the expansion image may be a map image of an area around the map image displayed on the device 1000. Otherwise, if the image displayed on the device 1000 is one of a plurality of home pages of the device 1000, then the expansion image may include the other home pages of the device 1000. However, the embodiment of FIG. 1 is not limited thereto, and the image displayed on the device 1000 may be any image that is displayable on the device 1000.

The server 2000 may determine whether the device 1000 is put on the plate, and may request the device 1000 for the expansion image related to the image displayed on the device 1000 if the device 1000 is put on the plate.

The device 1000 may provide, to the server 2000, the expansion image related to the image displayed on the screen of the device 1000, and the server 2000 may provide, to the projection apparatus 3000, the expansion image received from the device 1000. The projection apparatus 3000 receives the expansion image from the server 2000, and projects the received expansion image onto the plate. The expansion image may be projected onto the plate around the device 1000.

The photographing apparatus 4000 captures an image of the plate and the device 1000 that is put on the plate, and the image captured by the photographing apparatus 4000 is provided to at least one of the server 2000 and the device 1000. The image captured by the photographing apparatus 4000 may be used when the server 2000 or the device 1000 checks a location of the device 1000 on the plate. The image captured by the photographing apparatus 4000 may be used to determine a user input on the device 1000 and a user input on the expansion image.

The device 1000 may be, but is not limited to, a smartphone, a mobile phone, a Personal Digital Assistant (PDA), a laptop computer, a media player, a Global Positioning System (GPS), or another mobile or non-mobile computing apparatus.

The photographing apparatus 4000 may be, for example, a depth camera. However, the present embodiment is not limited thereto, and the photographing apparatus 4000 may be any suitable and/or similar camera.

Although the projection apparatus 3000 projects the expansion image onto the plate and the projected expansion image is displayed on the plate in the above description, the current embodiment is not limited thereto. The plate may be a predetermined apparatus including a display screen and, in this case, the expansion image of the area around the device 1000 may be displayed on the display screen of the plate.

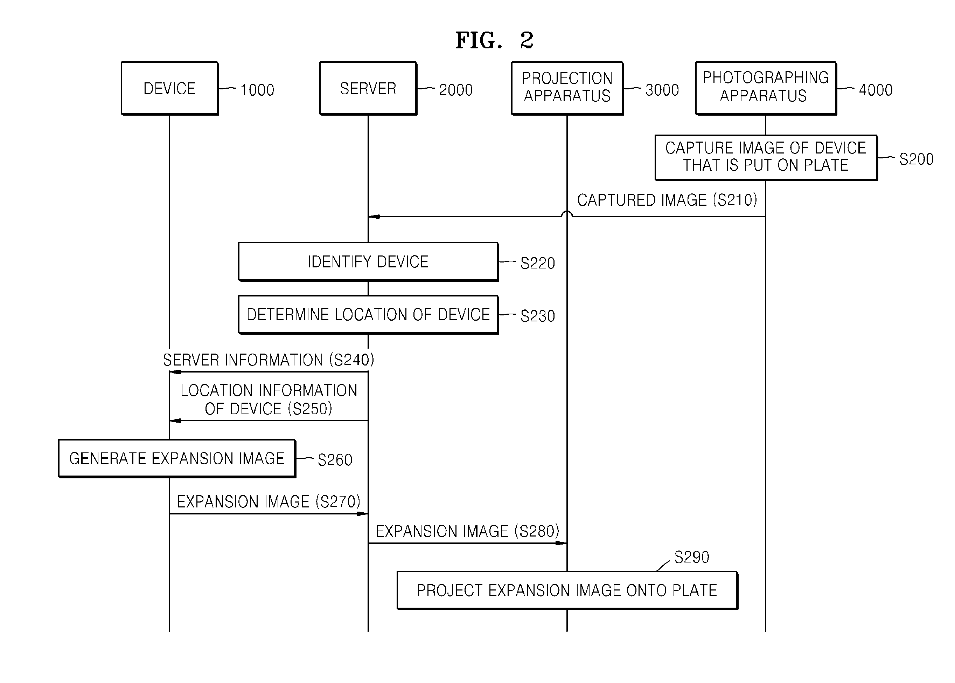

FIG. 2 is a flowchart of a method of displaying an expansion image related to an image displayed on a device in an expansion image providing system according to an embodiment of the present disclosure.

Referring to FIG. 2, in operation S200, the photographing apparatus 4000 captures an image of the device 1000 that is put on a plate. The photographing apparatus 4000 may capture the image of the plate together with the device 1000 that is put on the plate. The photographing apparatus 4000 may repeatedly capture the image of the plate and the device 1000 in order to determine at least one of whether the device 1000 is put on the plate, whether the device 1000 on the plate is moved, and whether a user makes a touch input on an expansion image on the plate. The photographing apparatus 4000 may be, but is not limited to, a depth camera or any similar and/or suitable type of camera.

In operation S210, the photographing apparatus 4000 provides the captured image to the server 2000. The photographing apparatus 4000 may provide the captured image to the server 2000 if the captured image is changed. However, the current embodiment is not limited thereto. For example, if a change in the captured image is sensed because the device 1000 is put on the plate, then the device 1000 that is put on the plate may have moved, or the user may touch the expansion image on the plate, then the photographing apparatus 4000 may provide the captured image to the server 2000.

In operation S220, the server 2000 identifies the device 1000 by using the captured image. The device 1000 may have a predetermined marker, and the server 2000 may identify the device 1000 based on the marker of the device 1000 that is included in the captured image. The server 2000 may determine an identification value of the device 1000, for example, a model name of the device 1000, a user Identifier (ID) of the device 1000, a phone number of the device 1000, or any other similar and/or suitable identification value and/or identification information, based on the marker of the device 1000.

The marker may be encoded information for identifying the device 1000 and may include, for example, a 1-dimensional barcode, a 2-dimensional barcode, a 3-dimensional barcode, a color barcode, a Quick Response (QR) code, a preset pattern, or any other similar and/or suitable type of encoded information.

In operation S230, the server 2000 determines a location of the device 1000. The server 2000 may determine whether the device 1000 is put on the plate and may determine the location of the device 1000 on the plate, based on the captured image received from the photographing apparatus 4000. The server 2000 may determine the location where the device 1000 is put on the plate, and may generate location information of the device 1000. For example, the location information of the device 1000 on the plate may include, but is not limited to, a predetermined coordinate value or any other similar and/or suitable location information.

If the device 1000 is put on the plate, then the server 2000 may request the device 1000 for an expansion image related to an image displayed on the device 1000.

In operation S240, the server 2000 provides server information to the device 1000. The server 2000 may be communicably connected to the device 1000 by using the identification value of the device 1000 that was determined in operation S220, or by any other similar and/or suitable connection method. The server 2000 may provide the server information to the device 1000. The server information may be information needed when the device 1000 accesses the server 2000 and transmits predetermined information to the server 2000.

The server 2000 may broadcast the server information for accessing the server 2000, and may be communicably connected to the device 1000 in response to a communication request received from the device 1000.

In operation S250, the server 2000 provides the location information of the device 1000 to the device 1000. The location information of the device 1000 may be information about the location of the device 1000 on the plate, and may include, for example, information about a size of the plate, a direction of the device 1000 that is put on the plate, a location of the device 1000, an area for displaying the expansion image on the plate, and any other similar and/or suitable type of location information.

In operation S260, the device 1000 generates an expansion image related to the image displayed on the device 1000. The expansion image is an image related to an image displayed on a screen of the device 1000, and may be an image that is not easily displayable on the screen of the device 1000 due to a small size of the screen of the device 1000 or due to any other similar and/or suitable reason preventing the image from being displayed on the screen of the device 1000. For example, if the image displayed on the device 1000 is a map image, then the expansion image may be a map image of an area around the map image displayed on the device 1000. Otherwise, if the image displayed on the device 1000 is one of a plurality of home pages of the device 1000, then the expansion image may include the other home pages of the device 1000. Otherwise, if the image displayed on the device 1000 is a predetermined web page, then other web pages linked to predetermined objects included in the web page displayed on the device 1000 may be included in the expansion image. Otherwise, if the image displayed on the device 1000 is a predetermined page of a webtoon, or any other similar and/or suitable plurality of serialized images, previous and next pages of the page displayed on the device 1000 may be included in the expansion image. However, the embodiment of FIG. 2 is not limited thereto.

The device 1000 may decide and/or determine a resolution of the expansion image in consideration of a size of the plate and a size of the device 1000, and may generate the expansion image at the decided and/or determined resolution.

The device 1000 provides the expansion image to the server 2000 in operation S270, and the server 2000 provides the expansion image to the projection apparatus 3000 in operation S280. The server 2000 may determine a projection direction of the expansion image onto the plate based on the location and direction of the device 1000 on the plate, and may provide the expansion image together with information about the projection direction of the expansion image to the projection apparatus 3000.

Although the device 1000 generates the expansion image in the above description, the embodiment of FIG. 2 is not limited thereto. The device 1000 may provide information about the image displayed on the screen of the device 1000 to the server 2000, and the server 2000 may generate the expansion image. For example, if a predetermined map image is displayed on the screen of the device 1000, then the device 1000 may provide, to the server 2000, information about the map image displayed on the screen of the device 1000. In this case, the information about the map image may include location information of the map image displayed on the screen of the device 1000, for example, a GPS value, a latitude value, a longitude value, or any other similar and/or suitable location information, and a resolution of the map image. The server 2000 may generate an expansion map image around the map image displayed on the device 1000, based on the location information of the map image and the resolution of the map image. The server 2000 may receive, from a separate map information providing server (not shown), the expansion map image around the map image displayed on the device 1000. The server 2000 may generate the expansion image based on the location information of the device 1000.

In operation S290, the projection apparatus 3000 projects the expansion image onto the plate. The projection apparatus 3000 may determine a projection direction of the expansion image onto the plate, and may project the expansion image in the determined projection direction. Accordingly, the projection apparatus 3000 may appropriately project the expansion image around the device 1000 in such a way that the expansion image is continued from the image displayed on the device 1000.

Although the server 2000 determines the size of the plate and the location and direction of the device 1000 on the plate based on the captured image in FIG. 2, an embodiment of the disclosure is not limited thereto. The server 2000 may provide the captured image to the device 1000, and the device 1000 may determine the size of the plate and the location and direction of the device 1000 on the plate based on the captured image received from the server 2000.

Unlike as shown in FIG. 2, the device 1000 may be connected to the projection apparatus 3000, may receive the captured image from the projection apparatus 3000, and may analyze the captured image in order to provide the expansion image to the projection apparatus 3000. In this case, the function of the server 2000 in FIG. 2 may be performed by the device 1000.

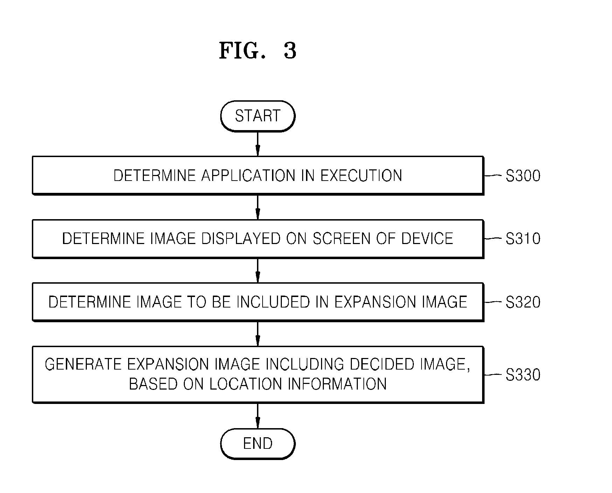

FIG. 3 is a flowchart of a method of generating an expansion image by the device 1000 according to an embodiment of the present disclosure.

Referring to FIG. 3, in operation S300, the device 1000 determines an application in execution, or in other words, and application that is currently being executed, on the device 1000. The device 1000 may determine the application in execution on the device 1000 in order to obtain information needed to generate an expansion image. The application in execution on the device 1000 may include an application in execution in the background of the device 1000, or in other words, an application that is being executed but is not being displayed.

In operation S310, the device 1000 determines an image displayed on a screen of the device 1000. The device 1000 may determine the image displayed on the screen and an application related to the image displayed on the screen.

In operation S320, the device 1000 determines an image to be included in the expansion image. The device 1000 may determine the image to be included in the expansion image based on the image displayed on the screen and the application in execution on the device 1000. For example, if a map application is in execution and a part of a whole map image is displayed on the screen of the device 1000, then the device 1000 may include another part of the whole map image in the expansion image. Otherwise, if one of the home pages of the device 1000 is displayed on the screen of the device 1000, the device 1000 may include other home pages in the expansion image. Otherwise, if an Internet browser is in execution and a predetermined page of a webtoon is displayed on the screen of the device 1000, then the device 1000 may include other pages of the webtoon in the expansion image.

The device 1000 may decide the image to be included in the expansion image, based on at least one of a size of a plate, a size of the device 1000, and a location of the device 1000 on the plate. For example, if the size of the plate is much greater than the size of the device 1000, then the device 1000 may include a larger image in the expansion image.

In operation S330, the device 1000 generates an expansion image including the determined image. The device 1000 may determine a resolution of the expansion image in consideration of the size of the plate or in consideration of any other similar and/or suitable factor, and may generate the expansion image at the determined resolution.

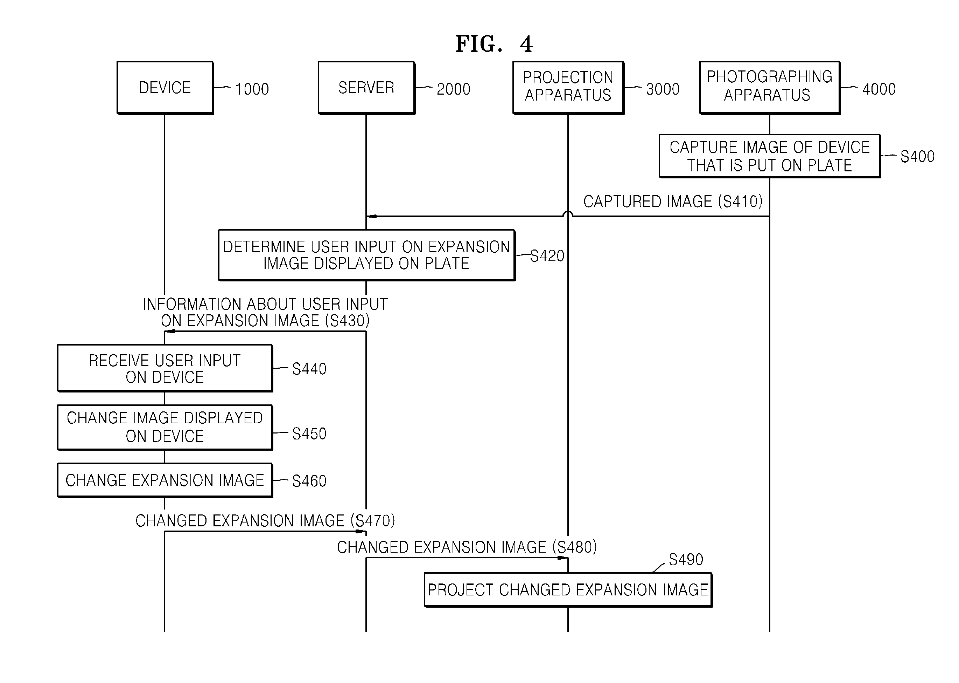

FIG. 4 is a flowchart of a method of changing and displaying an expansion image and an image displayed on a device, in an expansion image providing system according to an embodiment of the present disclosure.

Referring to FIG. 4, in operation S400, the photographing apparatus 4000 captures an image of the device 1000 that is put on a plate. The photographing apparatus 4000 may capture an image of the plate together with the device 1000 that is put on the plate. The photographing apparatus 4000 may repeatedly capture the image of the plate and the device 1000 in order to determine at least one of whether the device 1000 is put on the plate, whether the device 1000 on the plate is moved, and whether a user makes a touch input on an expansion image on the plate. The photographing apparatus 4000 may be, but is not limited to, a depth camera.

In operation S410, the photographing apparatus 4000 provides the captured image to the server 2000. The photographing apparatus 4000 may provide the captured image to the server 2000 if the captured image is changed. However, the embodiment of FIG. 4 is not limited thereto. For example, if a change in the captured image is sensed because the device 1000 is put on the plate, then the device 1000 that is put on the plate may be moved, or if the user touches the expansion image on the plate, then the photographing apparatus 4000 may provide the captured image to the server 2000.

In operation S420, the server 2000 determines a user input on and/or corresponding to the expansion image displayed on the plate. The user may make a touch input on and/or corresponding to the expansion image displayed on the plate, and the server 2000 may determine which part of the expansion image is touched by the user, based on an image captured by photographing the touch input of the user. For example, the server 2000 may determine at least one of which part of the expansion image is touched by the user, whether the expansion image is multi-touched, and the type of the touch input. The type of the touch input may include, for example, a tap, a long tap, a drag, a flick, a pinch, or any other similar and/or suitable type of touch input.

In operation S430, the server 2000 provides information about the user input on the expansion image to the device 1000. The server 2000 may provide, to the device 1000, information about the user input determined based on the captured image.

In operation S440, the device 1000 receives the user input on the device 1000. The user input on the device 1000 may include a touch input on a screen of the device 1000 or an input for moving the device 1000. The touch input on the screen of the device 1000 may include, for example, a tap, a long tap, a drag, a flick, a pinch, or any other similar and/or suitable type of touch input. The input for moving the device 1000 may include at least one of an input for changing a location of the device 1000 on the plate, an input for rotating the device 1000 on the plate, and an input for tilting the device 1000.

In operation S450, the device 1000 changes an image displayed on the device 1000. The device 1000 may change the image displayed on the device 1000 based on at least one of the user input on the device 1000, the user input on the expansion image, and based on any other similar and/or suitable user input. For example, if a predetermined object is selected on the image of the device 1000, then an application corresponding to the selecting of the object may be executed, and an execution screen of the executed application may be displayed on the device 1000. Otherwise, if a part of a predetermined whole image is displayed on the screen of the device 1000 and the other part of the predetermined whole image is displayed on the expansion image, in response to a user input for flicking the screen of the device 1000 or the expansion image, then the device 1000 may display a part of the expansion image on the screen of the device 1000. Otherwise, in response to a user input for pinching or unpinching the screen of the device 1000 or the expansion image, then the device 1000 may reduce or enlarge the screen displayed on the device 1000. Otherwise, if the device 1000 is tilted on the plate, then the device 1000 may make an object displayed on the screen of the device 1000 disappear from the screen of the device 1000.

In operation S460, the device 1000 changes the expansion image. The device 1000 may change the expansion image based on the user input on the device 1000 and the user input on the expansion image. For example, if a predetermined object is selected on the image of the device 1000, then an application corresponding to the selecting of the object may be executed, and a part of an execution screen of the executed application, which is not displayed on the device 1000, may be included in the expansion image. Otherwise, if a part of a predetermined whole image is displayed on the screen of the device 1000 and the other part of the predetermined whole image is displayed on the expansion image, in response to a user input for flicking the screen of the device 1000 or the expansion image, then the device 1000 may display the image displayed on the screen of the device 1000 on the expansion image. Otherwise, in response to a user input for pinching or unpinching the screen of the device 1000 or the expansion image, the device 1000 may reduce or enlarge the expansion image. Otherwise, if the device 1000 is tilted on the plate, then the device 1000 may display an object displayed on the screen of the device 1000 on the expansion image.

The device 1000 provides the changed expansion image to the server 2000 in operation S470, and the server 2000 provides the changed expansion image to the projection apparatus 3000 in operation S480.

In operation S480, the server 2000 may provide the changed expansion image together with information about how the changed expansion image is projected onto the plate. The server 2000 may determine a projection direction of the changed expansion image onto the plate based on at least one of a location and direction of the device 1000 on the plate, and may provide information about the projection direction of the changed expansion image to the projection apparatus 3000.

In operation S490, the projection apparatus 3000 projects the changed expansion image onto the plate. The projection apparatus 3000 may project the changed expansion image onto the plate based on the information about the projection direction of the changed expansion image.

Although the server 2000 determines the user input on the expansion image based on the captured image in FIG. 4, the embodiment of FIG. 4 is not limited thereto. The server 2000 may provide the captured image to the device 1000, and the device 1000 may determine the user input on the expansion image based on the captured image received from the server 2000.

Unlike as shown in FIG. 4, the server 2000 may change the image displayed on the device 1000 and the expansion image. In this case, the server 2000 may receive information about the user input on the device 1000 and information about the image displayed on the device 1000 from the device 1000. The server 2000 may change the image displayed on the device 1000 and the expansion image based on the user input on the device 1000 and the user input on the expansion image. For example, if a map image is displayed on the screen of the device 1000, then the server 2000 may change the map image displayed on the device 1000 and a map image included in the expansion image, based on at least one of the user input on the device 1000 and the user input on the expansion image.

Furthermore, unlike as shown in FIG. 4, the device 1000 may be connected to the projection apparatus 3000, may receive the captured image from the projection apparatus 3000, and may analyze the captured image in order to provide the changed expansion image to the projection apparatus 3000. In this case, the function of the server 2000 in FIG. 4 may be performed by the device 1000.

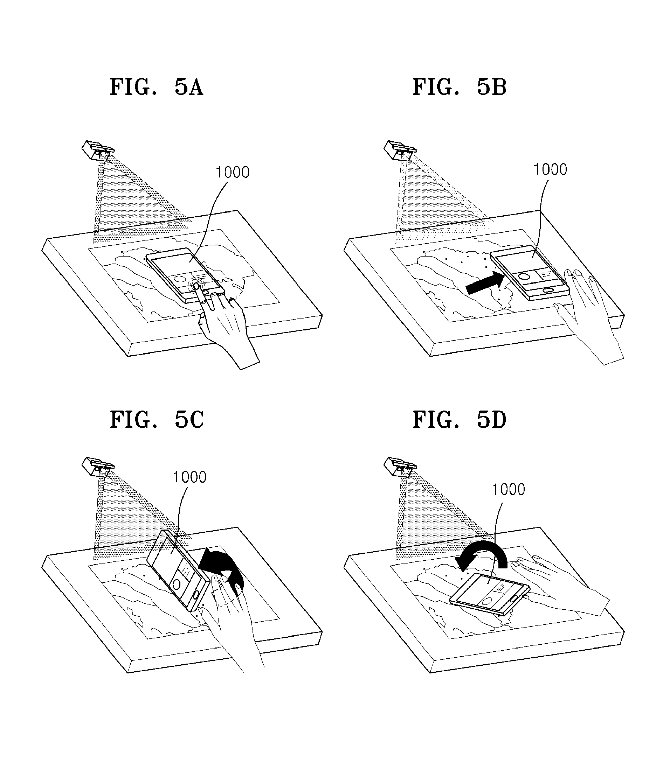

FIGS. 5A through 5D are images showing examples of a user input on a device according to an embodiment of the present disclosure.

Referring to FIG. 5A, the user input on the device 1000 may include a touch input on a screen of the device 1000. The touch input on the screen of the device 1000 may include, for example, a tap, a long tap, a drag, a flick, a pinch, or any other similar and/or suitable type of touch input. The touch input on the screen of the device 1000 may be sensed by a touch sensor included in the device 1000.

Referring to FIG. 5B, the user input on the device 1000 may include an input for changing a location of the device 1000 on a plate.

Referring to FIG. 5C, the user input on the device 1000 may include an input for changing a direction of the device 1000 that is put on the plate.

Referring to FIG. 5D, the user input on the device 1000 may include an input for tilting the device 1000 on the plate.

Referring to FIGS. 5B through 5D, the user input may be determined based on an image captured by the photographing apparatus 4000.

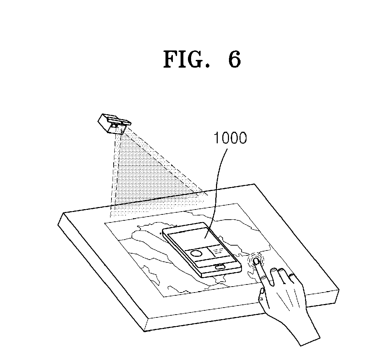

FIG. 6 is an image showing a user input on an expansion image according to an embodiment of the present disclosure.

Referring to FIG. 6, the user input on the expansion image displayed on a plate may be a touch input on the expansion image. The touch input on the expansion image may include, for example, a tap, a long tap, a drag, a flick, a pinch, or any other similar and/or suitable type of touch input. The touch input on the expansion image may be determined based on an image captured by the photographing apparatus 4000.

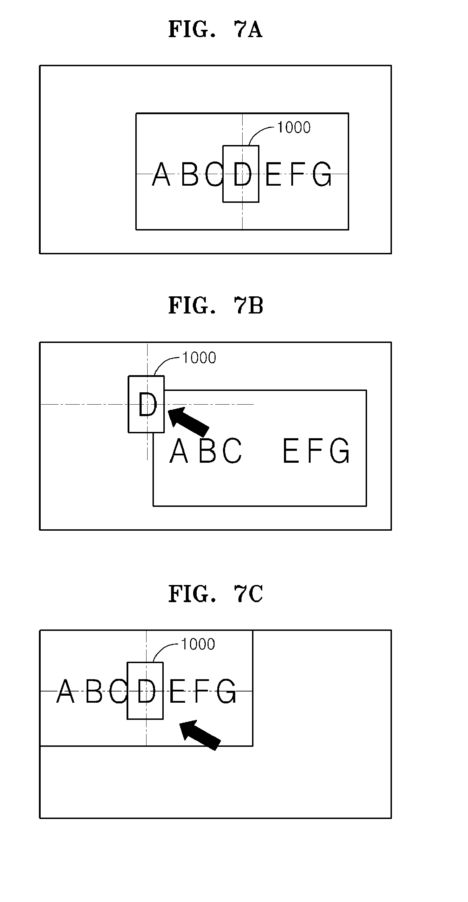

FIGS. 7A through 7C are images showing an example that an expansion image is moved on a plate when a device is moved on the plate according to an embodiment of the present disclosure.

Referring to FIG. 7A, 'D' may be displayed on a screen of the device 1000, and an expansion image including 'A, B, C, E, F, and G' may be displayed on a plate. Referring to FIG. 7B, a user may move the device 1000 on the plate to a top left side of the plate.

If the device 1000 is moved, as illustrated in FIG. 7C, then the expansion image including 'A, B, C, E, F, and G' may be moved to and displayed at the location to which the device 1000 is moved. In this case, a location where the expansion image is to be displayed may be decided with respect to a center of the device 1000. That is, if the device 1000 is moved, the location where the expansion image is to be displayed may be decided with respect to the center of the moved device 1000. However, the embodiment of FIGS. 7A through 7C is not limited thereto.

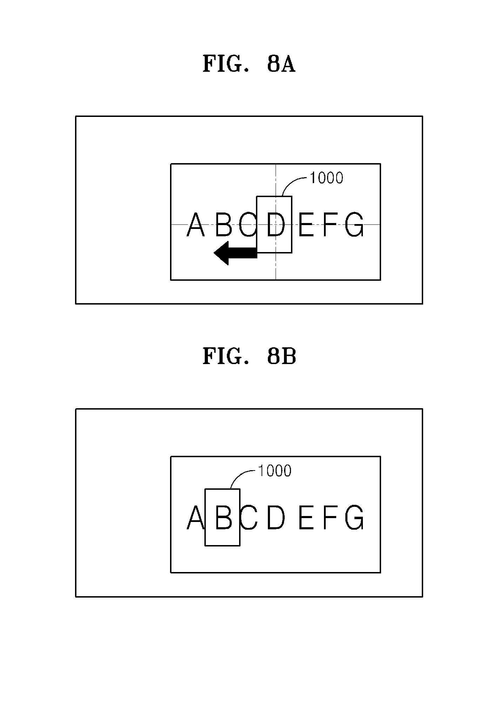

FIGS. 8A and 8B are images showing an example that an image displayed on a device is changed when the device is moved on a plate according to an embodiment of the present disclosure.

Referring to FIG. 8A, 'D' may be displayed on a screen of the device 1000, and an expansion image including 'A, B, C, E, F, and G' may be displayed on a plate.

Referring to FIG. 8B, a user may move the device 1000 on the plate to a left side of the plate, and thus, the image displayed on the screen of the device 1000 may be changed into 'B'. The expansion image may be changed to include 'A, C, D, E, F, and G'. The expansion image may be changed and displayed without changing a projection direction and location of the expansion image.

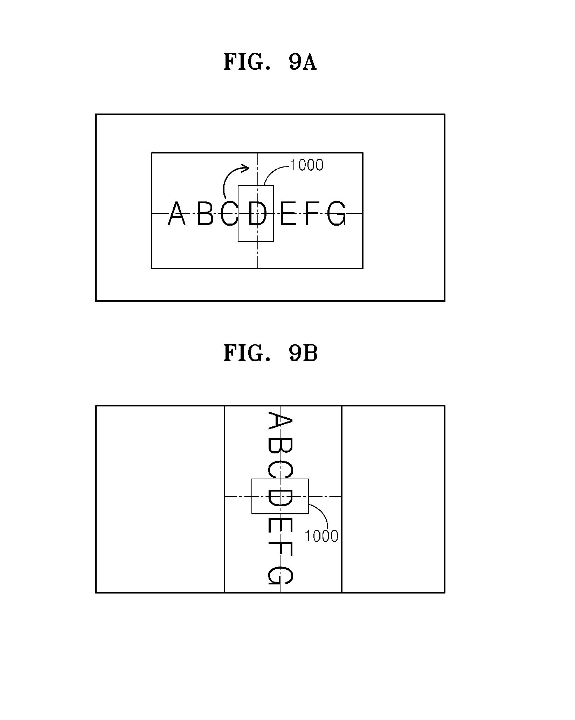

FIGS. 9A and 9B are images showing an example that an expansion image is rotated when a device is rotated on a plate according to an embodiment of the present disclosure.

Referring to FIGS. 9A and 9B, 'D' may be displayed on a screen of the device 1000, and an expansion image including 'A, B, C, E, F, and G' may be displayed on a plate. A user may rotate the device 1000 on the plate in a clockwise direction, and thus the expansion image may be displayed after being rotated in a clockwise direction.

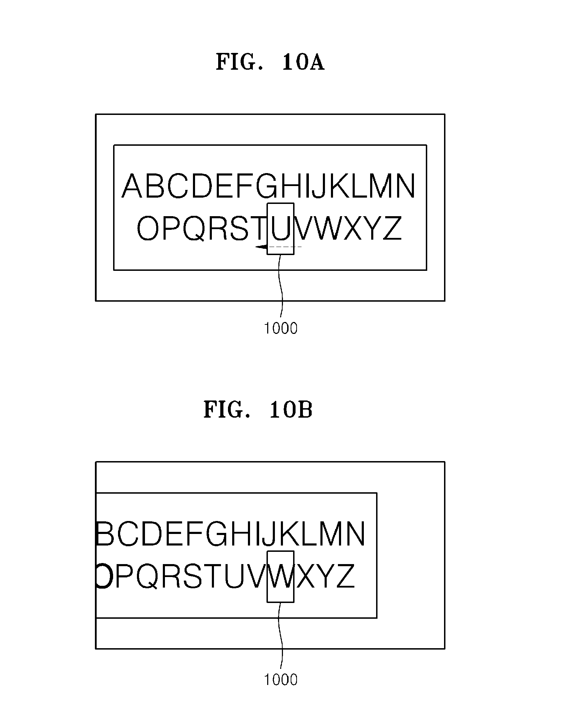

FIGS. 10A and 10B are images showing an example that an expansion image and an image displayed on a device are changed based on a touch input of a user on the device according to an embodiment of the present disclosure.

Referring to FIGS. 10A and 10B, 'U' may be displayed on a screen of the device 1000, and an expansion image including 'A, B, C, D, E, F, G, H, I, J, K, L, M, N, O, P, Q, R, S, T, V, W, X, Y, and Z' may be displayed on a plate. If a user makes a flick input on the screen of the device 1000, then the expansion image may be moved to a left side of the device 1000. As such, 'W' may be displayed on the screen of the device 1000, and 'A, B, C, D, E, F, G, H, I, J, K, L, M, N, O, P, Q, R, S, T, U, V, X, Y, and Z' may be included in the expansion image.

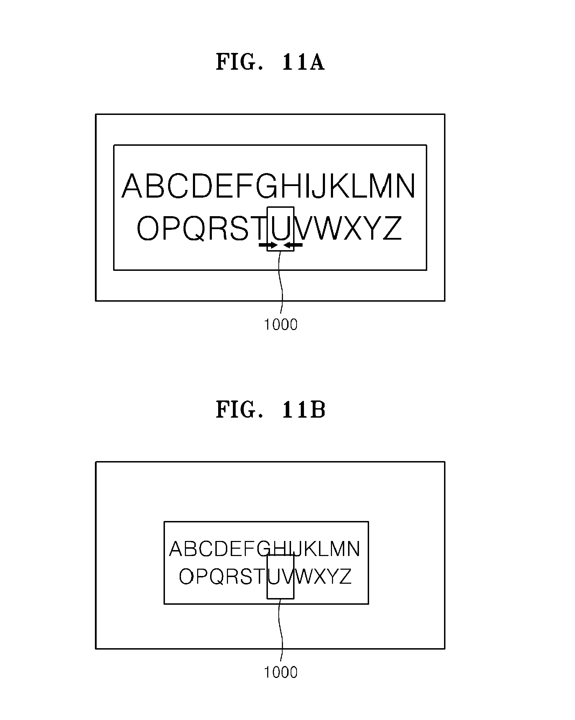

FIGS. 11A and 11B are images showing an example that an expansion image and an image displayed on a device are reduced in size based on a touch input of a user on the device according to an embodiment of the present disclosure.

Referring to FIGS. 11A and 11B, 'U' may be displayed on a screen of the device 1000, and an expansion image including 'A, B, C, D, E, F, G, H, I, J, K, L, M, N, O, P, Q, R, S, T, V, W, X, Y, and Z' may be displayed on a plate. If a user makes a pinch input on the screen of the device 1000, the expansion image and the image displayed on the device 1000 may be reduced in size. As such, 'U and V' may be displayed on the screen of the device 1000, and 'A, B, C, D, E, F, G, H, I, J, K, L, M, N, O, P, Q, R, S, T, W, X, Y, and Z' may be included in the expansion image.

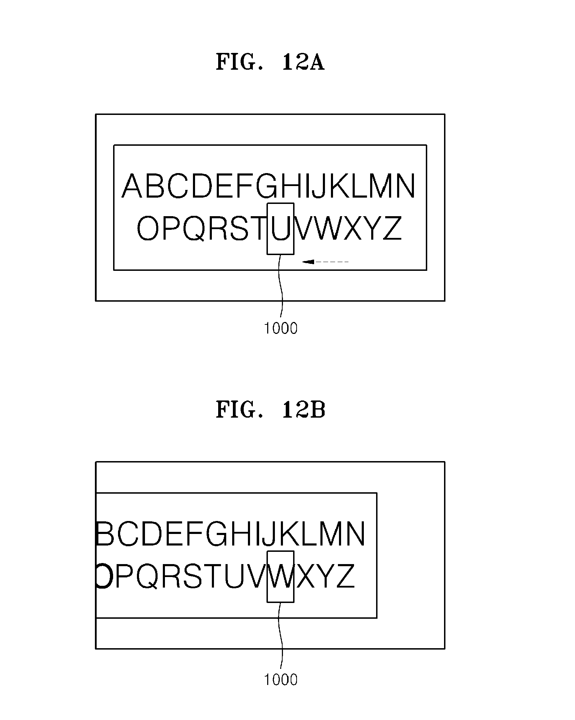

FIGS. 12A and 12B are images showing an example that an expansion image and an image displayed on a device are changed based on a touch input of a user on the expansion image according to an embodiment of the present disclosure.

Referring to FIGS. 12A and 12B, 'U' may be displayed on a screen of the device 1000, and an expansion image including 'A, B, C, D, E, F, G, H, I, J, K, L, M, N, O, P, Q, R, S, T, V, W, X, Y, and Z' may be displayed on a plate. If a user makes a flick input on the expansion image, the expansion image may be moved to a left side of the device 1000. As such, 'W' may be displayed on the screen of the device 1000, and 'A, B, C, D, E, F, G, H, I, J, K, L, M, N, O, P, Q, R, S, T, U, V, X, Y, and Z' may be included in the expansion image.

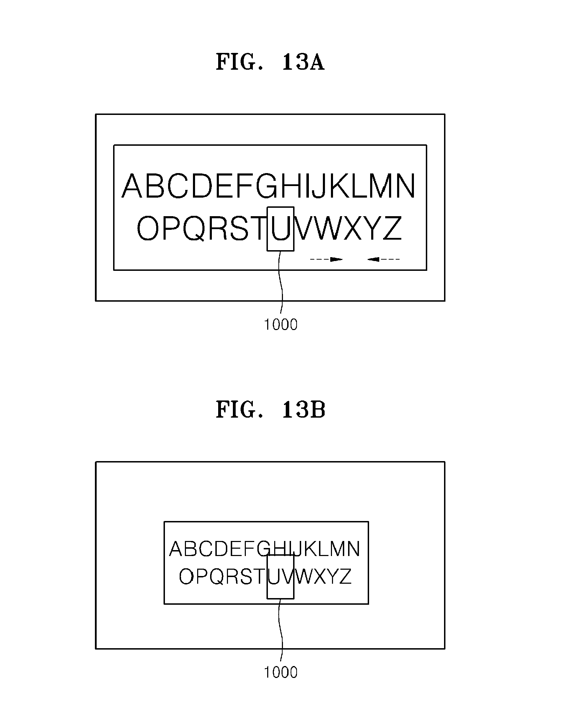

FIGS. 13A and 13B are images showing an example that an expansion image and an image displayed on a device are reduced in size based on a touch input of a user on the expansion image according to an embodiment of the present disclosure.

Referring to FIGS. 13A and 13B, 'U' may be displayed on a screen of the device 1000, and an expansion image including 'A, B, C, D, E, F, G, H, I, J, K, L, M, N, O, P, Q, R, S, T, V, W, X, Y, and Z' may be displayed on a plate. If a user makes a pinch input on the expansion image, the expansion image and the image displayed on the device 1000 may be reduced in size. As such, 'U and V' may be displayed on the screen of the device 1000, and 'A, B, C, D, E, F, G, H, I, J, K, L, M, N, O, P, Q, R, S, T, W, X, Y, and Z' may be included in the expansion image.

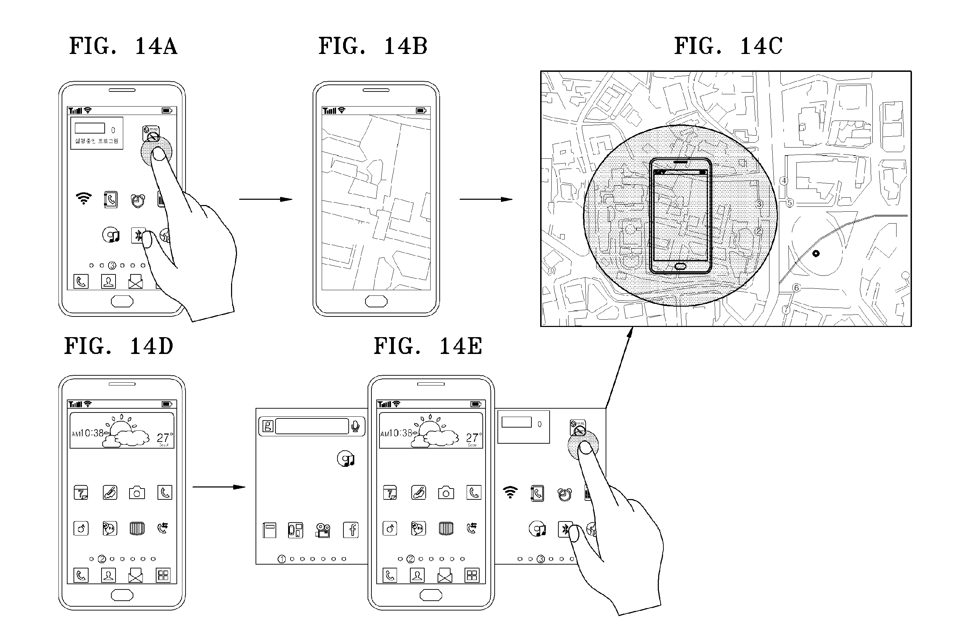

FIGS. 14A through 14E are images showing an example that a map image is displayed on an expansion image according to an embodiment of the present disclosure.

Referring to FIGS. 14A through 14E, if an icon of a map application displayed on a screen of the device 1000 is selected, as illustrated in FIG. 14A, then a map application corresponding to the icon may be executed. As illustrated in FIG. 14B, a map image may be displayed on the screen of the device 1000.

After that, if the device 1000 is put on a plate, as illustrated in FIG. 14C, then a map image of an area around the map image displayed on the device 1000, or in other words, an area of a map surrounding the area of the map displayed on the device 1000, may be displayed on an expansion image. Accordingly, a user may view a map image of an area wider than the area of the map image displayed on the device 1000, by using the expansion image projected onto the plate together with the image displayed on the device 1000.

As illustrated in FIGS. 14D and 14E, if the device 1000, on which one of a plurality of home pages of the device 1000 is displayed, is put on the plate, then other home pages of the plurality of homepages of the device 1000 may be displayed on the plate. The user may select an icon of a map application on the home pages displayed on the plate.

If an icon of a map application is selected, as illustrated in FIG. 14E, then a predetermined map image may be displayed on the device 1000 and a map image of an area around the map image displayed on the device 1000 may be displayed on an expansion image.

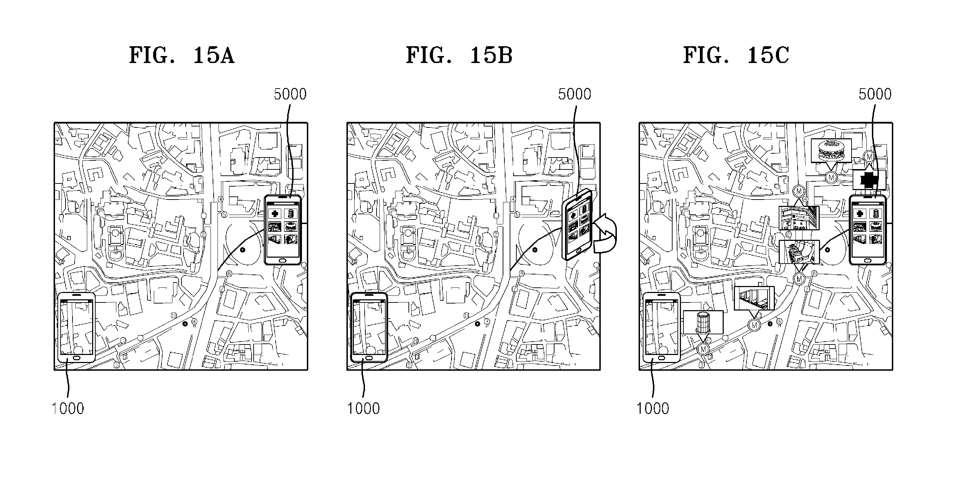

FIGS. 15A through 15C are images showing an example that photo images displayed on a screen of another device are moved onto an expansion image that is a map image according to an embodiment of the present disclosure.

Referring to FIGS. 15A through 15C, another device 5000 may be put on a plate on which a map image is displayed. A plurality of photo images may be displayed in a mosaic pattern on a screen of the other device 5000.

If the other device 5000 is tilted on the plate, as illustrated in FIG. 15B, then, as illustrated in FIG. 15C, the photo images displayed on the other device 5000 may be moved onto the expansion image. For example, the photo images displayed on the other device 5000 may be dropped from the screen of the other device 5000 and may be displayed on the map image that is the expansion image. As illustrated in FIG. 15C, the photo images displayed on the other device 5000 may be dropped from the other device 5000 and may be displayed at predetermined locations of the map image, which correspond to locations where the photo images were captured.

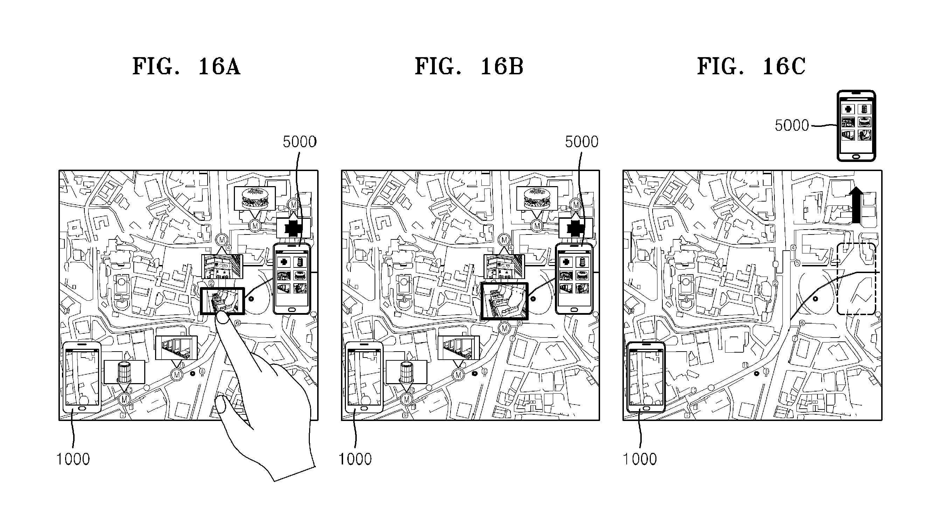

FIGS. 16A through 16C are images showing an example that photo images displayed on a screen of another device are moved onto an expansion image and then one of the photo images is enlarged and displayed according to an embodiment of the present disclosure.

Referring to FIGS. 16A through 16C, if a user touches a predetermined photo image displayed on an expansion image, as illustrated in FIG. 16A, then, as illustrated in FIG. 16B, an enlarged image of the touched photo image may be displayed on the expansion image.

As illustrated in FIG. 16C, if the other device 5000 is moved to the outside of a plate, photo images of the other device 5000 displayed on the expansion image may disappear from the expansion image.

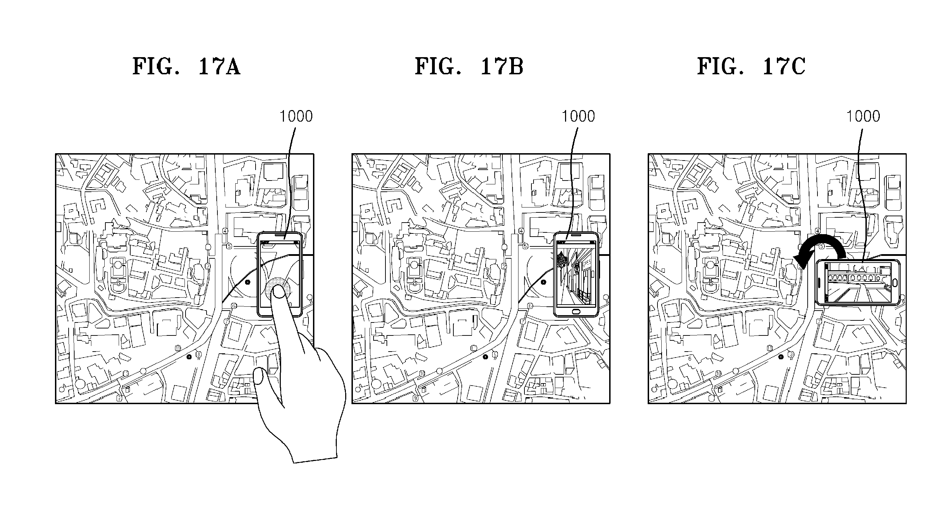

FIGS. 17A through 17C are images showing an example that a street view image is displayed on a screen of a device when an expansion image is a map image according to an embodiment of the present disclosure.

Referring to FIGS. 17A through 17C, an image displayed on the screen of the device 1000 and an image included in the expansion image may be map images, and a user may select an icon for viewing a predetermined street view image.

In this case, as illustrated in FIG. 17B, a street view image, which is captured at a location corresponding to where the device 1000 is put on a map, may be displayed on the screen of the device 1000. Since the device 1000 is put in a direction oriented toward a top side of the map in FIG. 17B, a street view image captured in a direction oriented toward a top side of the map, at the location corresponding to where the device 1000 is put, may be displayed on the screen of the device 1000.

As illustrated in FIG. 17C, if the device 1000 is rotated, then the street view image displayed on the screen of the device 1000 may be changed. Since the device 1000 is put in a direction oriented toward a left side of the map in FIG. 17C, a street view image captured in a direction oriented toward a left side of the map, at the location corresponding to where the device 1000 is put, may be displayed on the screen of the device 1000.

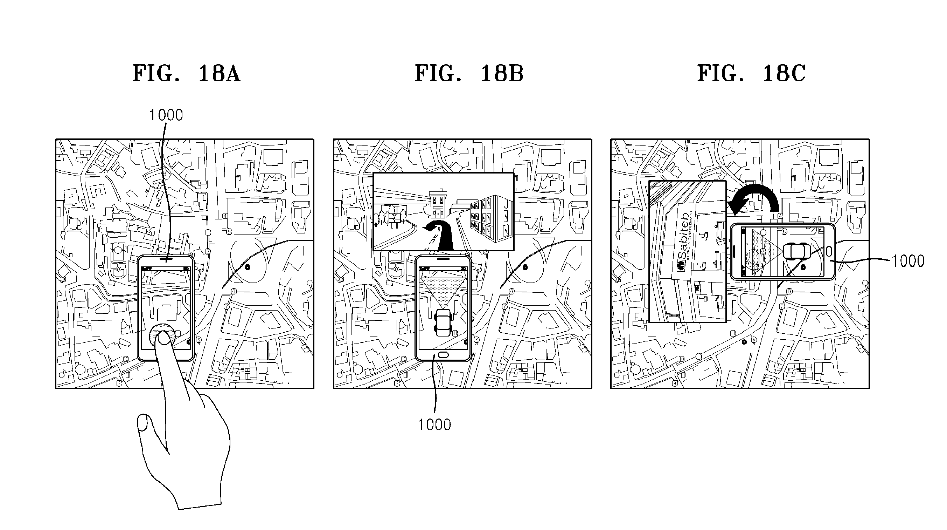

FIGS. 18A through 18C are images showing an example that a street view image is displayed near a device when an expansion image is a map image according to an embodiment of the present disclosure.

Referring to FIGS. 18A through 18C, an image displayed on a screen of the device 1000 and an image included in an expansion image may be map images, and a user may select an icon for viewing a predetermined street view image, as illustrated in FIG. 18A.

In this case, as illustrated in FIG. 18B, a street view image, which is captured at a location corresponding to where the device 1000 is put on a map, may overlap with the expansion image. Since the device 1000 is put in a direction oriented toward a top side of the map in FIG. 18B, a street view image captured in a direction oriented toward a top side of the map, at the location corresponding to where the device 1000 is put, may overlap with the expansion image.

As illustrated in FIG. 18C, if the device 1000 is rotated, then the street view image displayed on the screen of the device 1000 may be changed. Since the device 1000 is put in a direction oriented toward a left side of the map in FIG. 18C, a street view image captured in a direction oriented toward a left side of the map at the location corresponding to where the device 1000 is put may overlap with the expansion image.

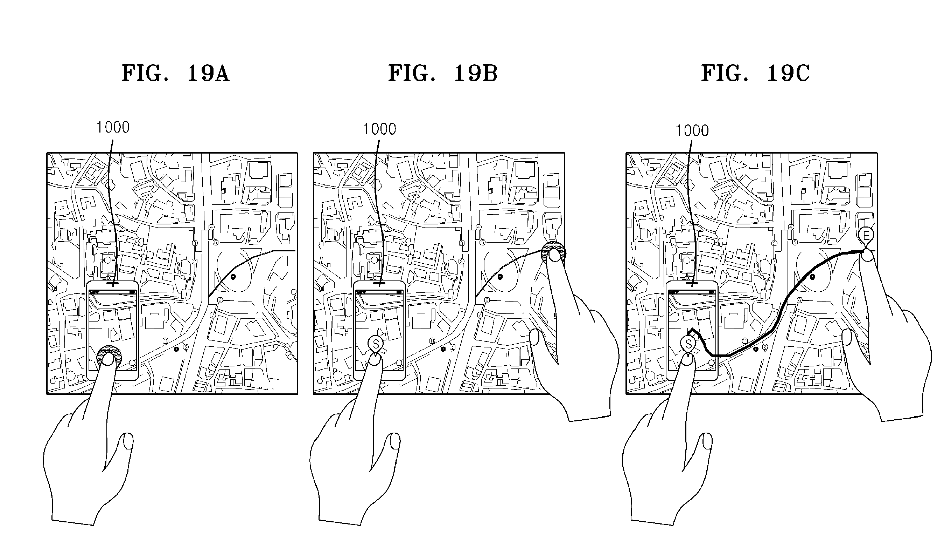

FIGS. 19A through 19C are images showing an example that a route is displayed based on user inputs on a device and an expansion image when the expansion image is a map image according to an embodiment of the present disclosure.

Referring to FIGS. 19A through 19C, if a user touches a predetermined point displayed on the device 1000 for more than a preset period of time, as illustrated in FIG. 19A, then a start point for route guidance may be input. As illustrated in FIG. 19B, if the user continuously touches the start point and touches a predetermined point of an expansion image for more than a preset period of time, then an end point for route guidance may be input. If the start point and the end point are input, as illustrated in FIG. 19C, then a route from the start point to the end point may be displayed on a screen of the device 1000 and the expansion image.

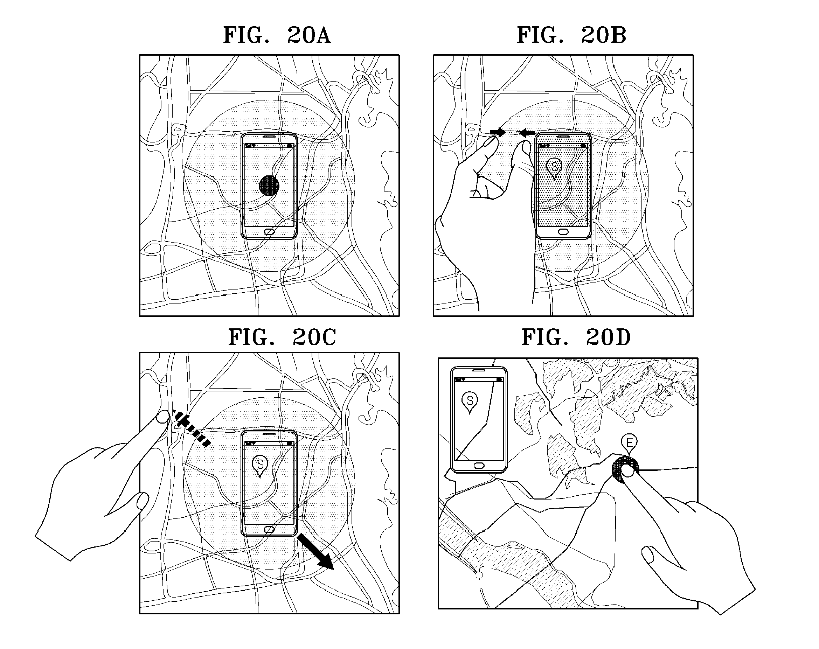

FIGS. 20A through 20D are images showing an example that a start point and an end point for route guidance are input based on a user input when an expansion image is a map image according to an embodiment of the present disclosure.

Referring to FIGS. 20A through 20D, a user may input a start point for route guidance by touching a predetermined point of the device 1000, as illustrated in FIG. 20A, and may reduce a map displayed on an expansion image, in size, by making a pinch input on the expansion image, as illustrated in FIG. 20B. In this case, a map displayed on a screen of the device 1000 may not be reduced in size.

As illustrated in FIG. 20C, the user may touch or drag the expansion image, or may move the device 1000, and thus, the map displayed on the expansion image may be moved.

As illustrated in FIG. 20D, if the user touches a predetermined point on the map displayed on the moved expansion image, then an end point for route guidance may be input.

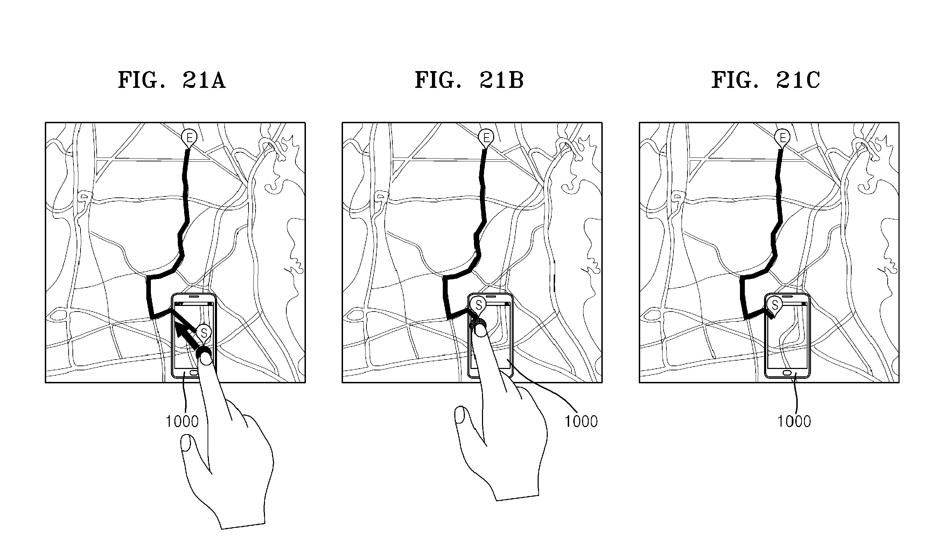

FIGS. 21A through 21C are images showing an example that a start point for route guidance is changed based on a user input when an expansion image is a map image according to an embodiment of the present disclosure.

Referring to FIGS. 21A through 21C, if a user touches and drags a start point displayed on the device 1000, then the start point for route guidance may be moved. A route from the moved start point to an end point may be displayed on a screen of the device 1000 and an expansion image.

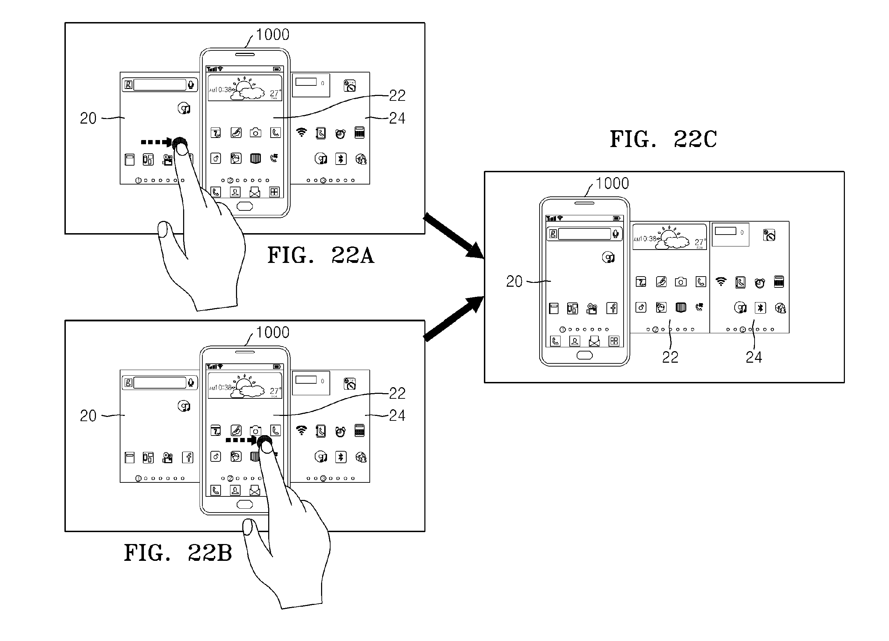

FIGS. 22A through 22C are images showing an example that a plurality of home pages of a device are displayed on an expansion image according to an embodiment of the present disclosure.

Referring to FIGS. 22A through 22C, one of a plurality of home pages 20, 22, and 24 of the device 1000, e.g., the home page 22, may be displayed on a screen of the device 1000, and the other home pages 20 and 24 may be displayed on an expansion image.

A user may flick the home page 20, which is displayed on the expansion image, as illustrated in FIG. 22A, or may flick the home page 22, which is displayed on the device 1000, as illustrated in FIG. 22C. As such, as illustrated in FIG. 22B, the home pages 20, 22, and 24 may be moved leftward, the home page 20 may be displayed on the screen of the device 1000, and the home pages 22 and 24 may be displayed on the expansion image.

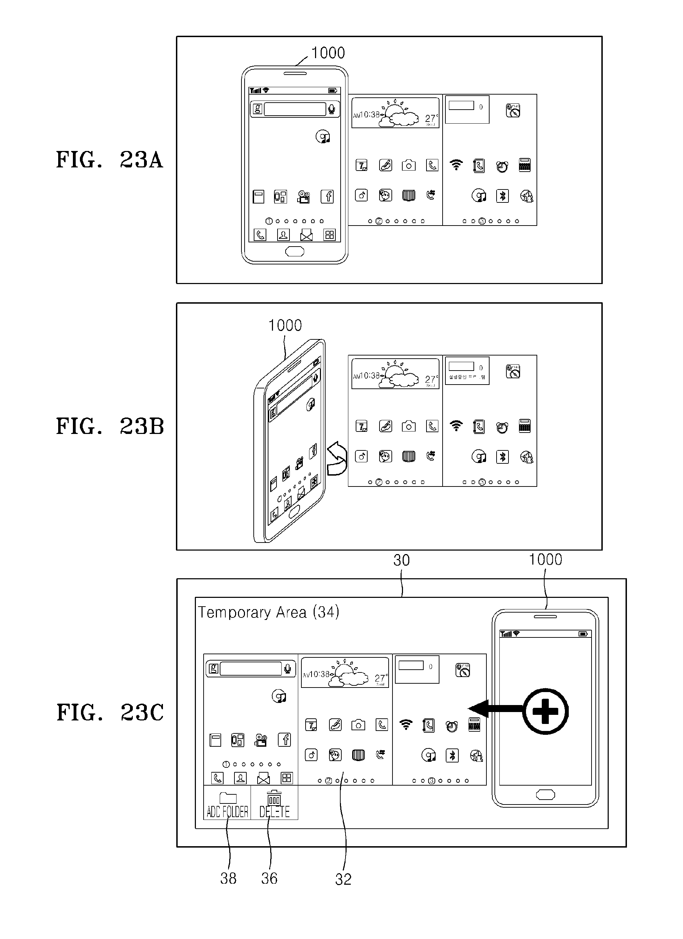

FIGS. 23A through 23C are images showing an example that an expansion image is displayed in an edit mode for editing home pages of a device according to an embodiment of the present disclosure.

Referring to FIGS. 23A through 23C, one of the home pages of the device 1000 may be displayed on a screen of the device 1000, and the other home pages may be displayed on an expansion image, as illustrated in FIG. 3A.

If a user tilts the device 1000, as illustrated in FIG. 23B, then, as illustrated in FIG. 23C, the home page displayed on the screen of the device 1000 may be moved to the expansion image, and thus, all home pages of the device 1000 may be displayed on the expansion image. FIG. 23C shows an example of the expansion image in an edit mode for editing the home pages of the device 1000.

As illustrated in FIG. 23C, in an edit mode for editing the home pages of the device 1000, an icon for adding a home page may be displayed on the screen of the device 1000, and an expansion image 30, projected onto a plate, may include a plurality of home pages 32 of the device 1000, a temporary area 34, a delete icon 36, and an add folder icon 38. A user may edit objects included in the home pages 32 by using the temporary area 34, the delete icon 36, and the add folder icon 38 included in the expansion image 30.

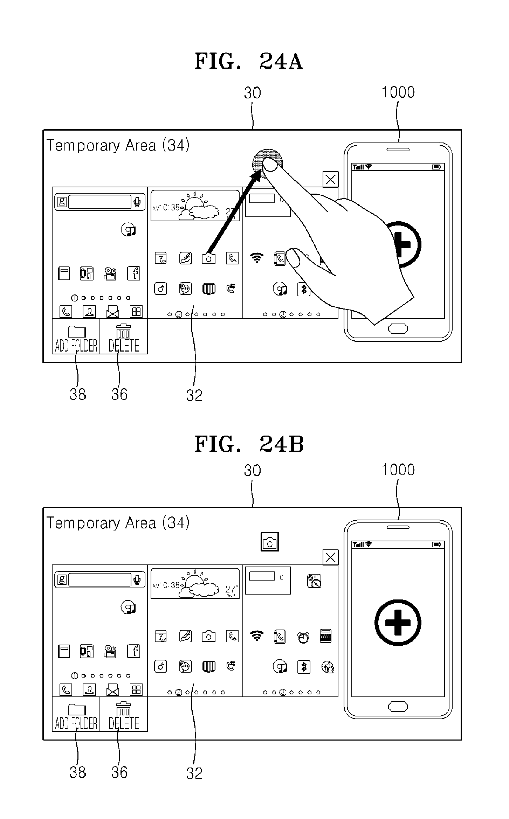

FIGS. 24A, 24B, 25A, 25B, 25C, 26A, 26B, 26C, and 26D are images showing examples that home pages included in an expansion image are edited in an edit mode for editing the home pages of a device according to various embodiments of the present disclosure.

Referring to FIGS. 24A and 24B, a user may temporarily move a predetermined icon included in the home pages 32 to the temporary area 34 by touching and dragging the icon.

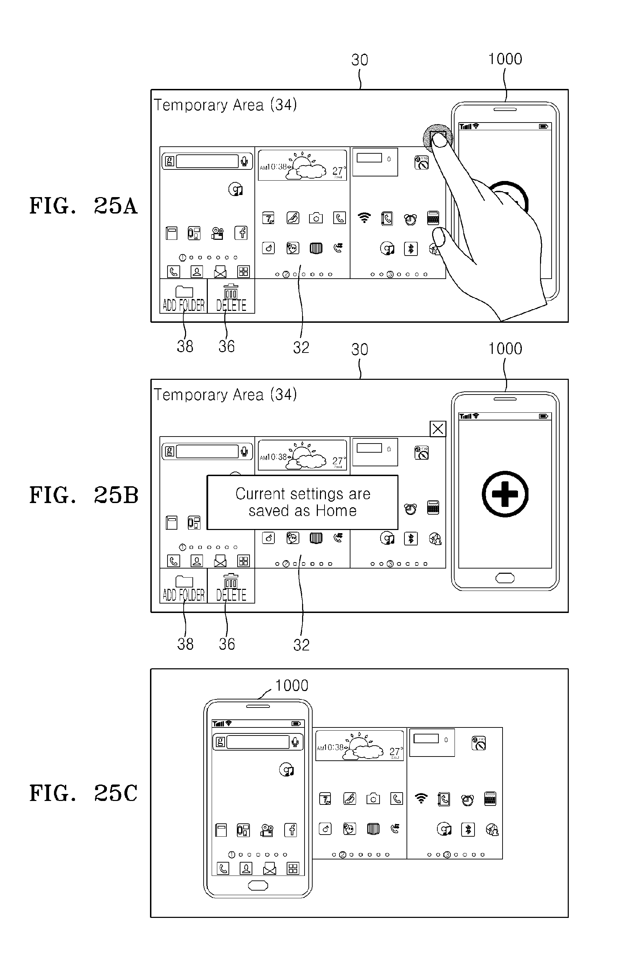

Referring to FIGS. 25A through 25C, if a user touches a predetermined button for terminating an edit mode, then, editing of the home pages 32 may be terminated, and then one of the home pages 32 of the device 1000 may be displayed on a screen of the device 1000, and the other home pages 32 may be displayed on an expansion image.

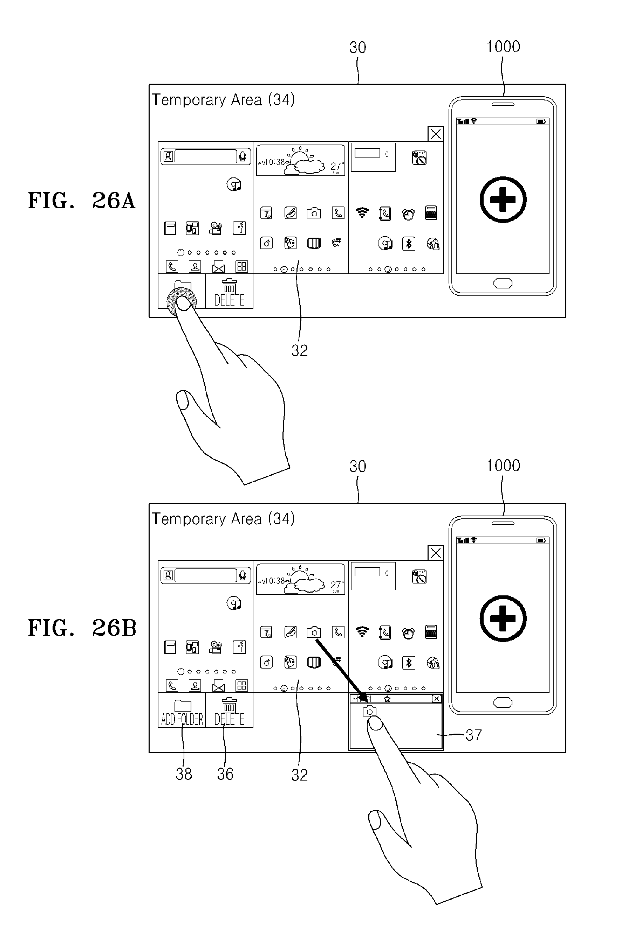

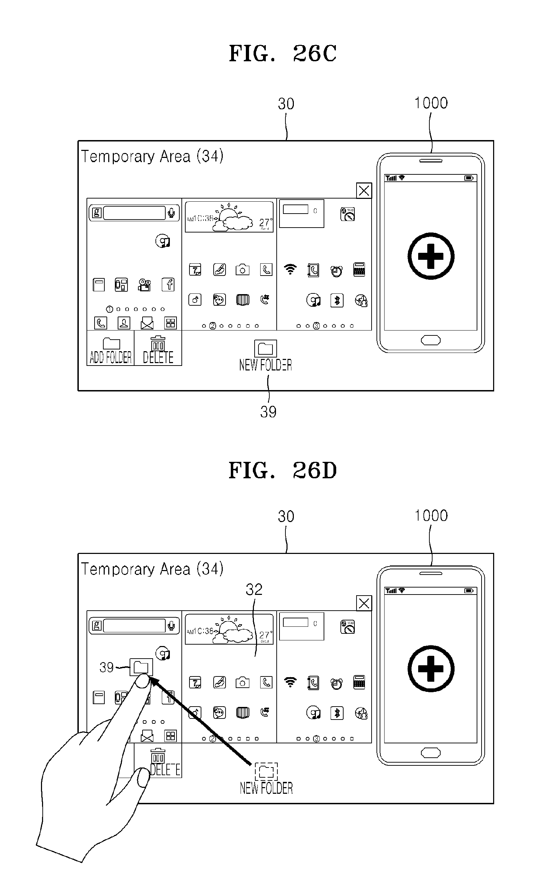

Referring to FIGS. 26A through 26D, if a user touches an add folder icon in an edit mode, then a new folder 37 may be generated in the temporary area 34 and the user may move a predetermined icon included in the home pages 32 to the new folder 37. As illustrated in FIGS. 26C and 26D, the user may move a new folder 39 from the temporary area 34 to the home pages 32 by touching and dragging the new folder 39.

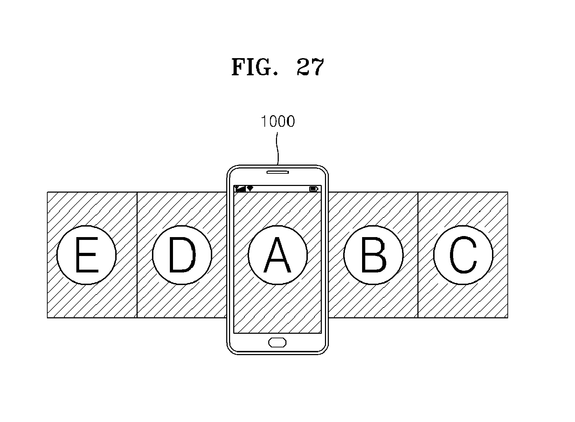

FIG. 27 is an image showing an example that predetermined web pages are included in an expansion image according to an embodiment of the present disclosure.

Referring to FIG. 27, the device 1000 may execute a web browser, and a web page A may be displayed on a screen of the device 1000. If the device 1000 is put on a plate, web pages B, C, D, and E may be displayed on an expansion image projected onto the plate.

A user may previously set web pages to be displayed on the expansion image projected onto the plate when the device 1000, having a web browser in execution, is put on the plate. However, the current embodiment is not limited thereto and any suitable and/or similar web pages may be displayed on the device 1000.

When the user opens a plurality of web pages and one of the web pages is displayed on the screen of the device 1000, and if the device 1000 is put on the plate, then the opened web pages may be included in the expansion image projected onto the plate.

If the user selects a predetermined object included in the web page displayed on the device 1000, then a web page linked to the selected object may be included in the expansion image projected onto the plate.

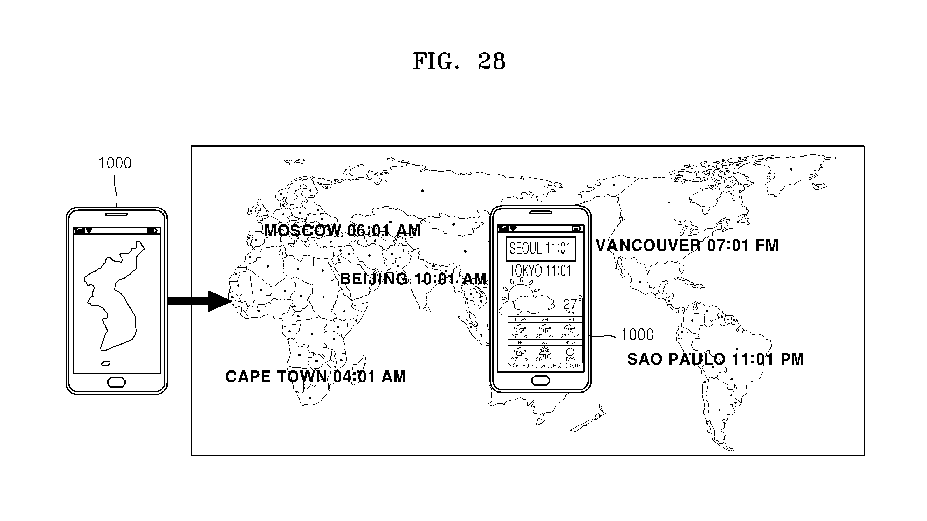

FIG. 28 is an image showing an example that information about global time is included in an expansion image according to an embodiment of the present disclosure.

As illustrated in FIG. 28, if the device 1000, on which a current time is displayed, is put on a plate, then a world map and local times around the world may be displayed on an expansion image projected onto the plate. A current time at a location of the device 1000 on the world map may be displayed on a screen of the device 1000. If the device 1000 is moved on the world map, then a current time at a location of the moved device 1000 may be displayed on the screen of the device 1000.

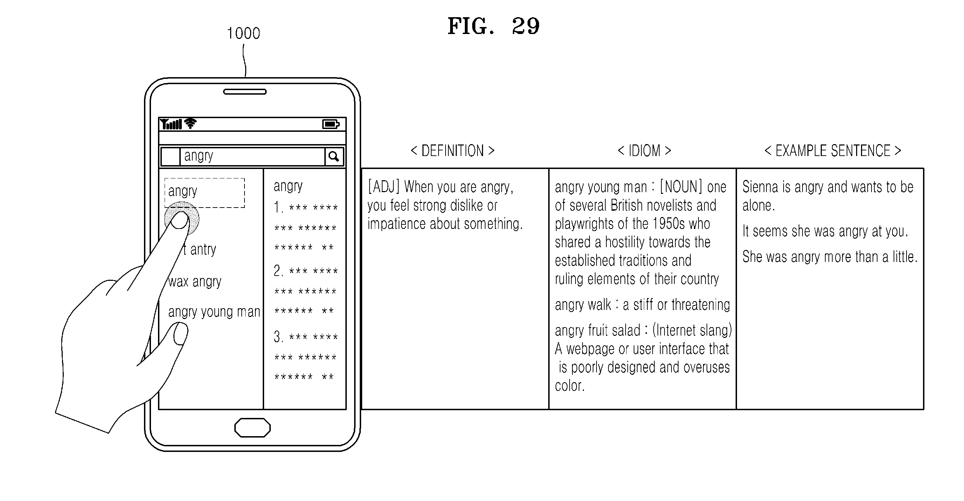

FIG. 29 is an example that a result of dictionary search is displayed on an expansion image according to an embodiment of the present disclosure.

Referring to FIG. 29, if a dictionary application is executed on the device 1000 and a predetermined word is input to the device 1000, then pages including a definition, idioms, example sentences, and any other similar and/or suitable information related to the input word may be included in an expansion image.

If a new word is input to the device 1000, then the expansion image may be changed to include pages including a definition, idioms, example sentences, and any other similar and/or suitable information related to the new word.

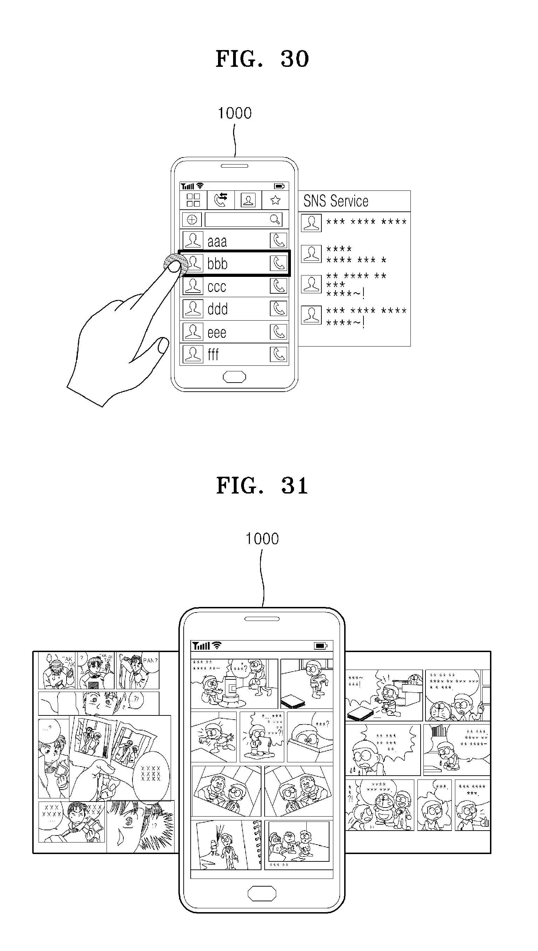

FIG. 30 is an image showing an example that an address book is displayed on a screen of a device and information about a user selected on the address book is included in an expansion image according to an embodiment of the present disclosure.

Referring to FIG. 30, if an address book is displayed on the screen of the device 1000 and a user selects a predetermined user included in the address book, then information about the selected user may be displayed on an expansion image. The information about the selected user may include, for example, a home page of a Social Network Service (SNS) used by the selected user, a posting uploaded by using a predetermined SNS by the selected user, or any other suitable and/or similar information that is related to the predetermined user.

FIG. 31 is an image showing an example that a page of a webtoon is displayed on a screen of a device and other pages of the webtoon are included in an expansion image according to an embodiment of the present disclosure.

Referring to FIG. 31, a predetermined page of a webtoon may be displayed on the screen of the device 1000. If the device 1000, on which the page of the webtoon is displayed, is put on a plate, previous and next pages corresponding to the page displayed on the device 1000 may be included in an expansion image projected onto the plate.

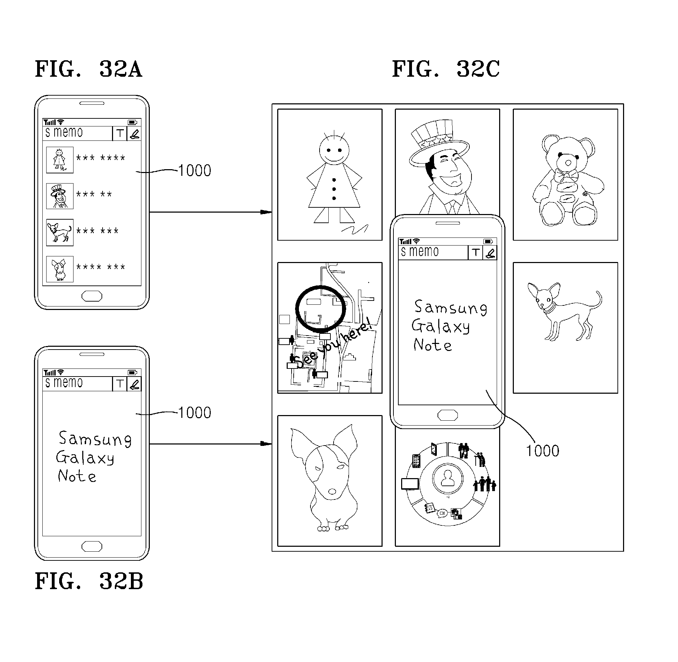

FIGS. 32A through 32C are images showing an example that a plurality of memos are displayed on an expansion image according to an embodiment of the present disclosure.

A memo application may be executed on the device 1000, and at least one of a list of memos and a predetermined memo may be displayed on a screen of the device 1000. If the device 1000, on which the at least one of the list of memos and the memo is displayed, is put on a plate, then memos stored in the device 1000 may be included in an expansion image projected onto the plate.

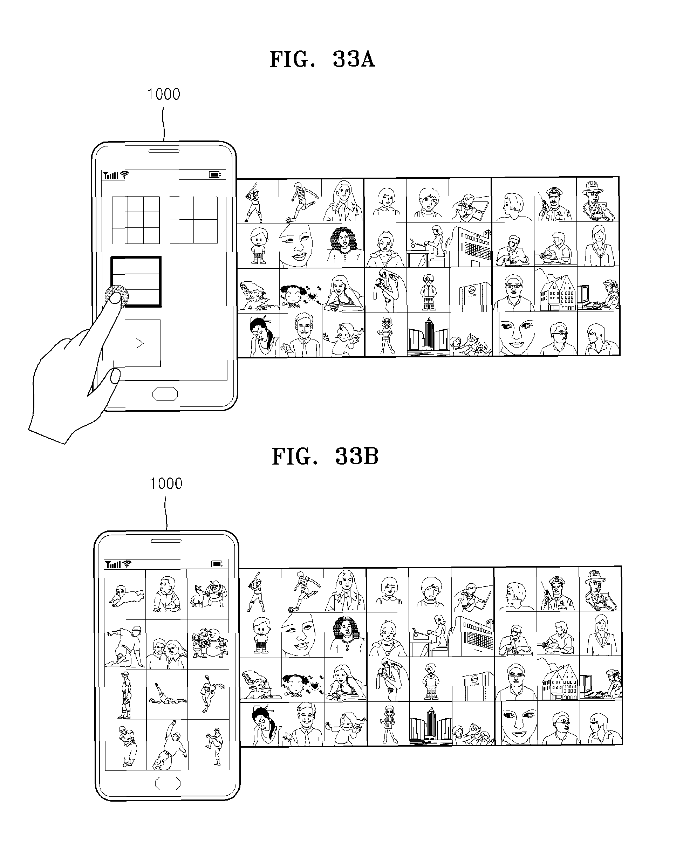

FIGS. 33A and 33B are images showing an example that photo images stored in a device are displayed on an expansion image according to an embodiment of the present disclosure.

Referring to FIG. 33A, a plurality of folders, which include a plurality of photo images, may be displayed on a screen of the device 1000, and a user may select a predetermined folder. If the user selects a predetermined folder, photo images included in the selected folder may be included in an expansion image projected onto a plate. In this case, the photo images may be aligned in a mosaic pattern on the expansion image.

Referring to FIG. 33B, photo images may be displayed in a mosaic pattern on the screen of the device 1000, and other photo images not displayed on the screen of the device 1000 may be displayed on the expansion image projected onto the plate.

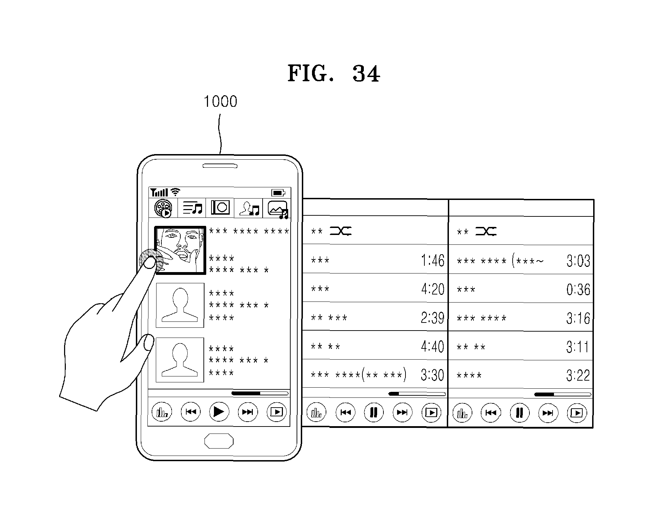

FIG. 34 is an image showing an example that a list of music files accessible by a device is displayed on an expansion image according to an embodiment of the present disclosure.

Referring to FIG. 34, a list of music albums may be displayed on a screen of the device 1000, and a user may select a predetermined music album. If the user selects a predetermined music album, then a list of music files, which are included in the selected music album, may be displayed on an expansion image.

However, the present disclosure is not limited thereto. A list of artists may be displayed on the screen of the device 1000 and, if the user selects a predetermined artist, then a list of music files of the selected artist may be displayed on the expansion image. Otherwise, a plurality of folders may be displayed on the screen of the device 1000 and, if the user selects a predetermined folder, then a list of music files included in the selected folder may be displayed on the expansion image.

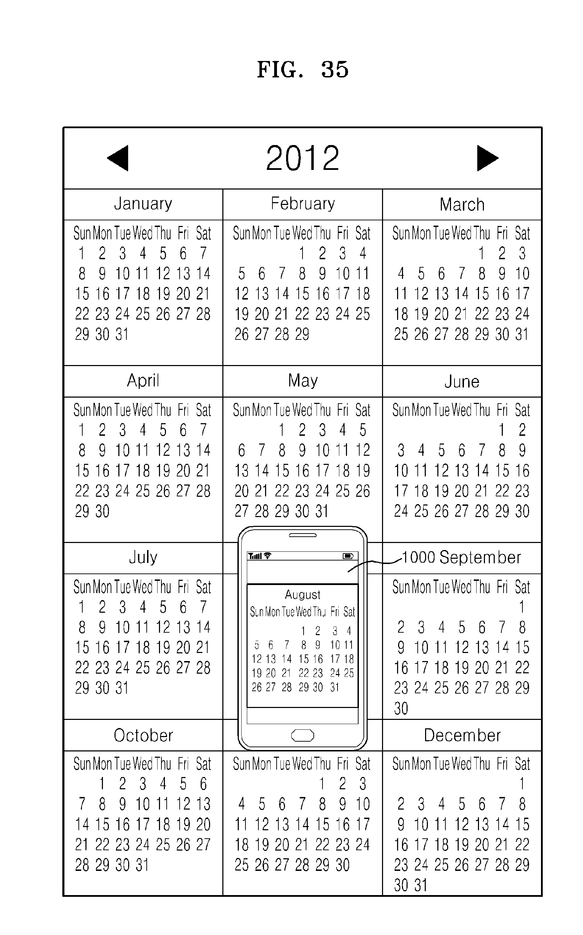

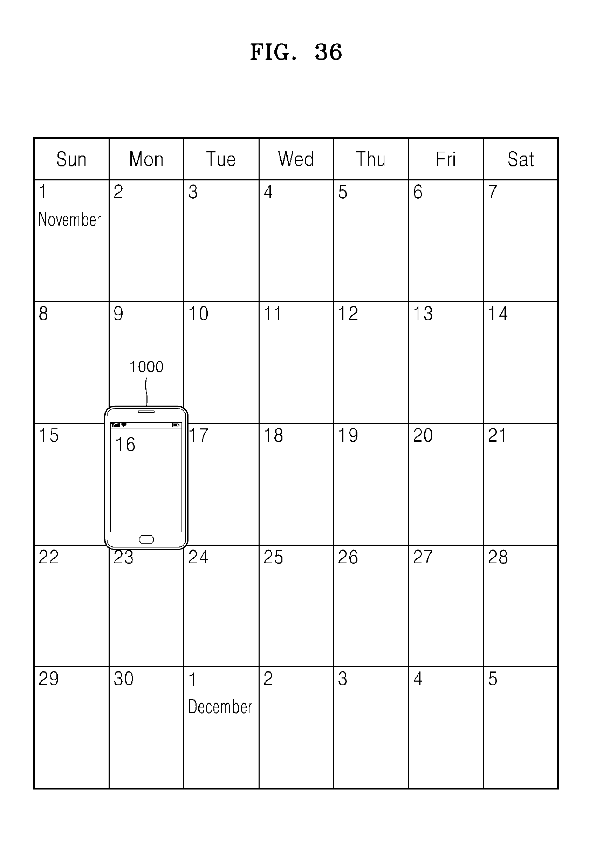

FIGS. 35 and 36 are images showing examples that a calendar image is displayed on an expansion image according to various embodiments of the present disclosure.

Referring to FIG. 35, if the device 1000, on which a calendar for a month is displayed, is put on a plate, then a calendar, including months other than the month displayed on the device 1000, may be displayed on an expansion image projected onto the plate. For example, if the device 1000, on which a calendar for August is displayed, is put on the plate, then a calendar for January to July and September to December may be displayed on the expansion image.

Referring to FIG. 36, if the device 1000, on which a predetermined date is displayed, is put on the plate, then a calendar for a month, including the date displayed on the device 1000, may be displayed on the expansion image. For example, if the device 1000, on which November 16 is displayed, is put on the plate, then a calendar for November may be displayed on the expansion image.

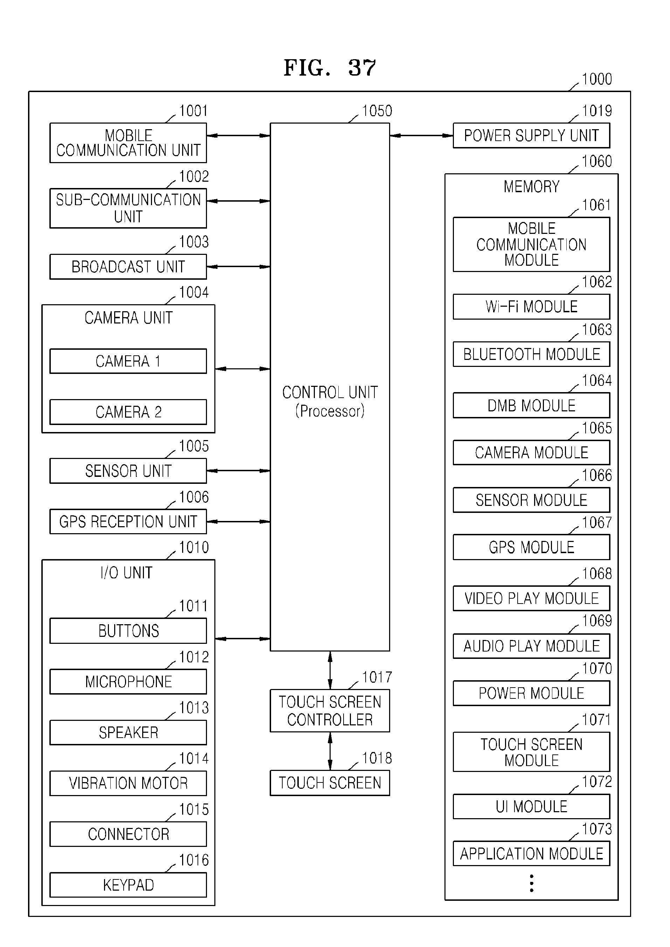

FIG. 37 is a block diagram of a device according to an embodiment of the present disclosure.

Referring to FIG. 37, the device 1000 may include a mobile communication unit 1001, which performs, for example, call setup and data communication with a base station via a cellular network, such as a 3^{rd} Generation (3G), 4^{th} Generation (4G), and any other similar and/or suitable wireless and/or mobile communication network. A sub communication unit 1002 performs a function for short-distance communication, such as Bluetooth or Near Field Communication (NFC). A broadcasting reception unit 1003 receives a Digital Multimedia Broadcasting (DMB) signal.

A camera unit 1004 includes a lens and optical elements for capturing a photo or video and may include at least one of camera 1 and camera 2.

A sensor unit 1005 may include at least one of a gravity sensor for sensing motion of the device 1000, an illumination sensor for sensing brightness of light, a proximity sensor for sensing proximity of a person, a motion sensor for sensing motion of a person, and any other similar and/or suitable sensor that may be included in the device 1000.

A GPS reception unit 1006 receives a GPS signal, which may include location information, from a satellite. Various services may be provided to a user by using GPS signals.

An Input/Output (I/O) unit 1010 provides an interface with the external apparatus 2000, the user, and any other element that may use an interface to operate with the device 1000, and includes buttons 1011, a microphone 1012, a speaker 1013, a vibration motor 1014, a connector 1015, and a keypad 1016.

A touch screen 1018 receives a touch input of the user. A touch screen controller 1017 transmits, to a control unit 1050, the touch input received by the touch screen 1018. A power supply unit 1019 is connected with at least one of a battery and an external power source to supply power to the device 1000. A touch screen 1018 may include a touch input unit (not shown) and a display unit (not shown), which may be integrated to be one unit (not shown). The touch input unit may sense a touch according to a change in a resistance, a change in a capacitance, or according to any similar and/or suitable value that changes according to a user's touch. The display unit may include any suitable display device, such as a Light Emitting Diode (LED) display, an Organic LED (OLED), a Liquid Crystal Display (LCD), a Thin Film Transistor (TFT) display, or any other similar and/or suitable display device.

The control unit 1050 provides an expansion image to the server 2000 or the projection apparatus 3000 by executing programs stored in a memory 1060. The control unit 1050 may be any suitable type of hardware element, such as a processor, an Integrated Circuit (IC), an Application Specific IC (ASIC), and Erasable Programmable Read Only Memory (EPROM), or any other similar and/or suitable hardware element.

The programs stored in the memory 1060 may be classified into a plurality of modules according to their functions, for example, a mobile communication module 1061, a Wi-Fi module 1062, a Bluetooth module 1063, a DMB module 1062, a camera module 1065, a sensor module 1066, a GPS module 1067, a video player module 1068, an audio player module 1069, a power module 1070, a touch screen module 1071, a User Interface (UI) module 1072, an application module 1073, and any other similar and/or suitable module.

Functions of most of the modules would be easily understood by one of ordinary skill in the art in view of their names, and thus only the application module 1073 will be described here.

The application module 1073 may receive a request for an expansion image from the server 2000, and may provide a predetermined expansion image, to the server 2000, in response to the received request.

The application module 1073 receives server information and location information of the device 1000 via at least one of the mobile communication unit 1001 and the sub communication unit 1002. The location information of the device 1000 is information about a location of the device 1000 on a plate, and may include, but is not limited to, for example, information about at least one of a size of the plate, a direction of the device 1000 that is put on the plate, a location of the device 1000, and an area for displaying the expansion image on the plate.

The application module 1073 generates an expansion image related to an image displayed on the device 1000. The application module 1073 may determine an application in execution, or in other words, an application that is currently being executed, on the device 1000, may determine an image displayed on a screen of the device 1000, may decide an image to be included in the expansion image, and may generate an expansion image including the determined image. For example, if a map application is in execution and a part of a whole map image is displayed on the screen of the device 1000, then the application module 1073 may include the other part of the whole map image in the expansion image. Otherwise, if one of the home pages of the device 1000 is displayed on the screen of the device 1000, then the application module 1073 may include the other home pages in the expansion image. Otherwise, if an Internet browser is in execution and a predetermined page of a webtoon is displayed on the screen of the device 1000, then the application module 1073 may include other pages of the webtoon in the expansion image. However, the present disclosure is not limited thereto.

The application module 1073 may decide the image to be included in the expansion image, based on at least one of a size of the plate, a size of the device 1000, a location of the device 1000 on the plate, or any other similar and/or suitable factor. For example, if the size of the plate is much greater than the size of the device 1000, then the application module 1073 may include a larger image in the expansion image.

The application module 1073 may receive information about a user input on the expansion image from the server 2000, and may determine a user input on the device 1000. The user input on the device 1000 may include a touch input on the screen of the device 1000, an input for moving the device 1000, or any other similar and/or suitable touch input. The application module 1073 may determine the user input on the device 1000 via the touch screen 1018 and the sensor unit 1005.

The application module 1073 may change the image displayed on the device 1000, based on at least one of the user input on the device 1000 and the user input on the expansion image. For example, if a predetermined object is selected on the image of the device 1000, then an application corresponding to the selecting of the object may be executed, and an execution screen of the executed application may be displayed on the device 1000. Otherwise, if a part of a predetermined whole image is displayed on the screen of the device 1000 and the other part of the predetermined whole image is displayed on the expansion image, then, in response to a user input for flicking the screen of the device 1000 or the expansion image, the application module 1073 may display a part of the expansion image on the screen of the device 1000. Otherwise, in response to a user input for pinching or unpinching the screen of the device 1000 or the expansion image, the application module 1073 may reduce or enlarge the screen displayed on the device 1000. Otherwise, if the device 1000 is tilted on the plate, the application module 1073 may make an object displayed on the screen of the device 1000 disappear from the screen of the device 1000.

The application module 1073 may change the expansion image based on the user input on the device 1000 and the user input on the expansion image. For example, if a predetermined object is selected on the image of the device 1000, then an application corresponding to the selecting of the object may be executed, and a part of an execution screen of the executed application, which is not displayed on the device 1000, may be included in the expansion image. Otherwise, if a part of a predetermined whole image is displayed on the screen of the device 1000 and the other part of the predetermined whole image is displayed on the expansion image, then, in response to a user input for flicking the screen of the device 1000 or the expansion image, the application module 1073 may display the image, which is displayed on the screen of the device 1000, on the expansion image. Otherwise, in response to a user input for pinching or unpinching the screen of the device 1000 or the expansion image, the application module 1073 may reduce or enlarge the expansion image. Otherwise, if the device 1000 is tilted on the plate, the application module 1073 may display an object displayed on the screen of the device 1000, on the expansion image.

The application module 1073 provides the expansion image to the server 2000 or the projection apparatus 3000 via the mobile communication unit 1001 or the sub communication unit 1002.

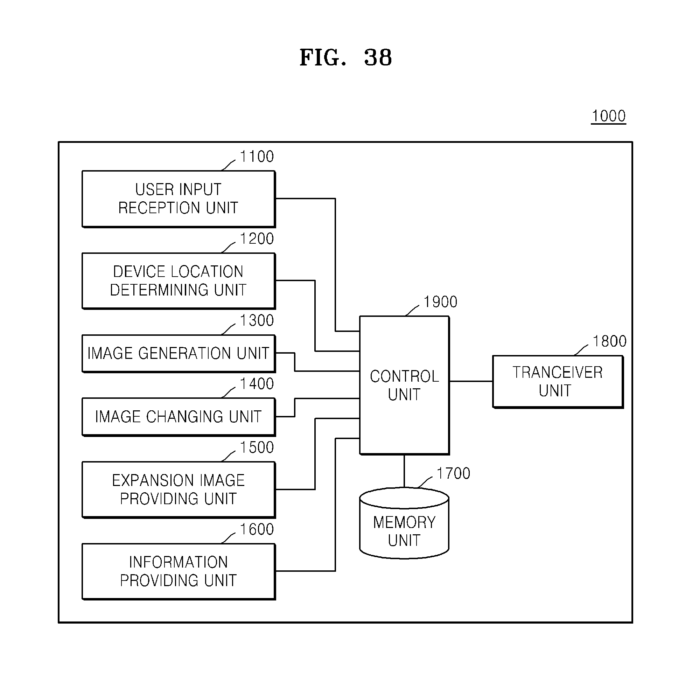

FIG. 38 is a block diagram of a device according to another embodiment of the present disclosure.

Referring to FIG. 38, the device 1000, according to an embodiment, includes a user input reception unit 1100, a device location determining unit 1200, an image generation unit 1300, an image changing unit 1400, an expansion image providing unit 1500, an information providing unit 1600, a memory unit 1700, a transceiver unit 1800, and a control unit 1900.

The user input reception unit 1100 receives a user input on the device 1000. The user input reception unit 1100 receives information about a user input on an expansion image from the server 2000. The user input on the expansion image may be a touch input, of a user, corresponding to the expansion image. The user input on the device 1000 may include at least one of a touch input on a screen of the device 1000 and an input for moving the device 1000.

The device location determining unit 1200 receives location information of the device 1000 from the server 2000, and determines a location of the device 1000 on a plate. The location information of the device 1000 may be information about the location of the device 1000 on the plate, and may include, but is not limited to, for example, information about a size of the plate, a direction of the device 1000 that is put on the plate, a location of the device 1000, and an area for displaying the expansion image on the plate.

The image generation unit 1300 generates an image to be displayed on the device 1000 and an expansion image to be projected onto the plate. The image generation unit 1300 may determine an application in execution on the device 1000, may determine an image displayed on the screen of the device 1000, may determine an image to be included in the expansion image, and may generate an expansion image including the decided image. For example, if a map application is in execution on the device 1000 and a part of a whole map image is displayed on the screen of the device 1000, then the image generation unit 1300 may include the other part of the whole map image in the expansion image. However, the present disclosure is not limited thereto

The image generation unit 1300 may determine the image to be included in the expansion image, based on at least one of a size of the plate, a size of the device 1000, and a location of the device 1000 on the plate. For example, if the size of the plate is much greater than the size of the device 1000, then the image generation unit 1300 may include a larger image in the expansion image.

The image generation unit 1300 may receive a request for an expansion image from the server 2000, and may generate an expansion image in response to the received request.

The image changing unit 1400 may change the image displayed on the device 1000 and the expansion image projected onto the plate, based on at least one of the user input on the device 1000 and the user input on the expansion image.

The expansion image providing unit 1500 provides the expansion image to the server 2000.

The information providing unit 1600 may provide information about a projection location of the expansion image onto the plate to the server 2000. The information providing unit 1600 may provide information about a projection location and direction of the expansion image to the server 2000, based on the location information of the device 1000 received from the server 2000. However, the present disclosure is not limited thereto.

The information providing unit 1600 may not provide the information about the projection location and direction of the expansion image to the server 2000 and, in this case, the server 2000 may determine the projection location and direction of the expansion image based on the location information of the device 1000.

The memory unit 1700 stores various types of information used when the device 1000 generates and changes the image to be displayed on the device 1000 and the expansion image, and provides the expansion image to the server 2000. The memory unit 1700 may be any suitable computer readable storage medium such as a Random Access Memory (RAM), a Read Only Memory (ROM), a magnetic storage device such as a hard disk, a floppy disc, a Secure Digital (SD) memory, an optical storage device, such as a Compact Disc (CD), or any other suitable and/or similar computer readable storage medium.

The transceiver unit 1800 transmits and receives, to and from the server 2000 and the projection apparatus 3000, the various types of information used when the device 1000 generates and changes the image to be displayed on the device 1000 and the expansion image, and provides the expansion image to the server 2000.

The control unit 1900 controls all operations of the device 1000, and controls the user input reception unit 1100, the device location determining unit 1200, the image generation unit 1300, the image changing unit 1400, the expansion image providing unit 1500, the information providing unit 1600, the memory unit 1700, and the transceiver unit 1800 in such a way that the device 1000 generates and changes the image to be displayed on the device 1000 and the expansion image, and provides the expansion image to the server 2000.

Some or all of the user input reception unit 1100, the device location determining unit 1200, the image generation unit 1300, the image changing unit 1400, the expansion image providing unit 1500, the information providing unit 1600, the transceiver unit 1800, and the control unit 1900 may be driven by software modules, but are not limited thereto. Some of the user input reception unit 1100, the device location determining unit 1200, the image generation unit 1300, the image changing unit 1400, the expansion image providing unit 1500, the information providing unit 1600, the transceiver unit 1800, and the control unit 1900 may be driven by hardware.

At least some of the user input reception unit 1100, the device location determining unit 1200, the image generation unit 1300, the image changing unit 1400, the expansion image providing unit 1500, the information providing unit 1600, and the transceiver unit 1800 may be included in the control unit 1900, and the user input reception unit 1100, the device location determining unit 1200, the image generation unit 1300, the image changing unit 1400, the expansion image providing unit 1500, the information providing unit 1600, the transceiver unit 1800, and the control unit 1900 may be driven by one processor. However, the present disclosure is not limited thereto.

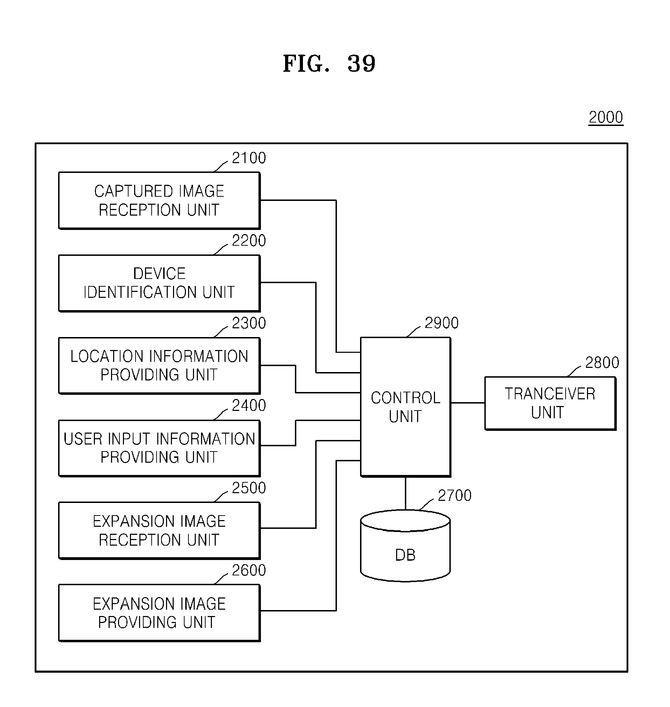

FIG. 39 is a block diagram of a server according to an embodiment of the present disclosure.

As illustrated in FIG. 39, the server 2000, according to an embodiment, includes a captured image reception unit 2100, a device identification unit 2200, a location information providing unit 2300, a user input information providing unit 2400, an expansion image reception unit 2500, an expansion image providing unit 2600, a Database (DB) 2700, a transceiver unit 2800, and a control unit 2900.

The captured image reception unit 2100 receives a captured image from the photographing apparatus 4000. The photographing apparatus 4000 may capture an image of the plate together with the device 1000 that is put on the plate, and may provide the captured image to the server 2000 if the captured image is changed.

The device identification unit 2200 identifies the device 1000 by using the captured image. The device 1000 may have a predetermined marker, and the device identification unit 2200 may identify the device 1000 based on the marker of the device 1000 included in the captured image. The device identification unit 2200 may determine an identification value of the device 1000, for example, a model name of the device 1000, a user ID of the device 1000, and a phone number of the device 1000, based on the marker of the device 1000.

The device identification unit 2200 may determine whether the device 1000 is put on the plate. If the device 1000 is put on the plate, then the device identification unit 2200 may request the device 1000 for an expansion image related to an image displayed on the device 1000.

The location information providing unit 2300 provides location information of the device 1000 disposed on the plate to the device 1000. The location information providing unit 2300 may determine a location of the device 1000 disposed on the plate, based on the captured image received from the photographing apparatus 4000. The location information providing unit 2300 may determine the location of the device 1000 disposed on the plate, and may generate the location information of the device 1000. For example, the location information of the device 1000 disposed on the plate may include, but is not limited to, a predetermined coordinate value. The location information of the device 1000 is information about the location of the device 1000 disposed on the plate, and may include, but is not limited to, for example, at least one of information about a size of the plate, a direction of the device 1000 that is put on the plate, a location of the device 1000, and an area for displaying the expansion image on the plate.

The user input information providing unit 2400 provides information about a user input on the expansion image. The user input information providing unit 2400 may determine the user input on the expansion image displayed on the plate. A user may make a touch input on the expansion image displayed on the plate, and the user input information providing unit 2400 may determine which part of the expansion image is touched by the user, based on an image captured by photographing the touch input of the user. For example, the user input information providing unit 2400 may determine which part of the expansion image is touched by the user, whether the expansion image is multi-touched, and the type of the touch input.

The user input information providing unit 2400 may provide, to the device 1000, an image captured by photographing a touch input of the user on the expansion image. In this case, the device 1000 may determine which part of the expansion image is touched by the user, based on the image captured by photographing the touch input of the user.

The expansion image reception unit 2500 receives the expansion image from the device 1000. The expansion image reception unit 2500 may receive the expansion image together with information about a projection location and direction of the expansion image onto the plate.

The expansion image providing unit 2600 provides the expansion image to the projection apparatus 3000. The expansion image providing unit 2600 may provide to the projection apparatus 3000, the expansion image together with the information about the projection location and direction of the expansion image onto the plate.

If the expansion image reception unit 2500 does not receive the information about the projection location and direction of the expansion image from the device 1000, then the expansion image providing unit 2600 may determine the projection location and direction of the expansion image onto the plate, based on a location and direction of the device 1000 on the plate, and may determine a size of the plate.

The DB 2700 stores various types of information used when the server 2000 receives the captured image from the photographing apparatus 4000, when the server 2000 provides the location information of the device 1000 to the device 1000, when the server 2000 receives the expansion image from the device 1000, and when the server 2000 provides the received expansion image to the projection apparatus 3000.

The transceiver unit 2800 transmits and receives, to and from the device 1000, the photographing apparatus 4000, and the projection apparatus 3000, the various types of information used when the server 2000 receives the captured image from the photographing apparatus 4000, when the server 2000 provides the location information of the device 1000 to the device 1000, when the server 2000 receives the expansion image from the device 1000, and when the server 2000 provides the received expansion image to the projection apparatus 3000.

The control unit 2900 controls the captured image reception unit 2100, the device identification unit 2200, the location information providing unit 2300, the user input information providing unit 2400, the expansion image reception unit 2500, the expansion image providing unit 2600, the DB 2700, and the transceiver unit 2800 in such a way that the server 2000 receives the captured image from the photographing apparatus 4000, provides the location information of the device 1000 to the device 1000, receives the expansion image from the device 1000, and provides the received expansion image to the projection apparatus 3000.

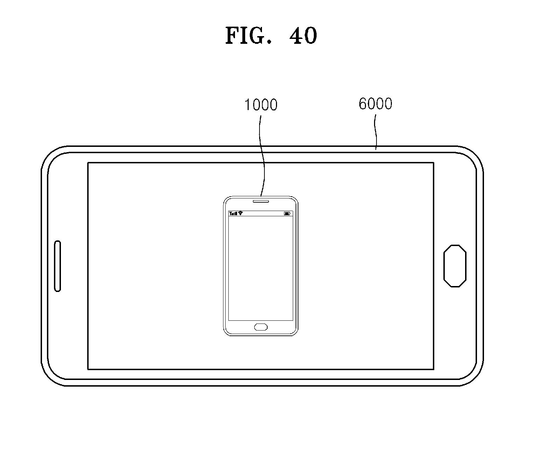

FIG. 40 is a schematic diagram of an expansion image providing system according to an embodiment of the present disclosure.

Referring to FIG. 40, in the expansion image providing system, according to an embodiment, the device 1000 may be put on an external device 6000 having a screen larger than the screen of the device 1000. The external device 6000 may sense that the device 1000 is put or disposed on the screen of the external device 6000, and may request the device 1000 for an expansion image. The device 1000 may provide, to the external device 6000, an expansion image related to an image displayed on the screen of the device 1000, and the external device 6000 may display the expansion image on a part of or the whole screen of the external device 6000.

The external device 6000 is a device having a screen larger than the screen of the device 1000, and may be, but is not limited to, a smartphone, a mobile phone, a PDA, a laptop computer, a media player, a GPS device, another mobile or non-mobile computing apparatus, or any other similar and/or suitable device.

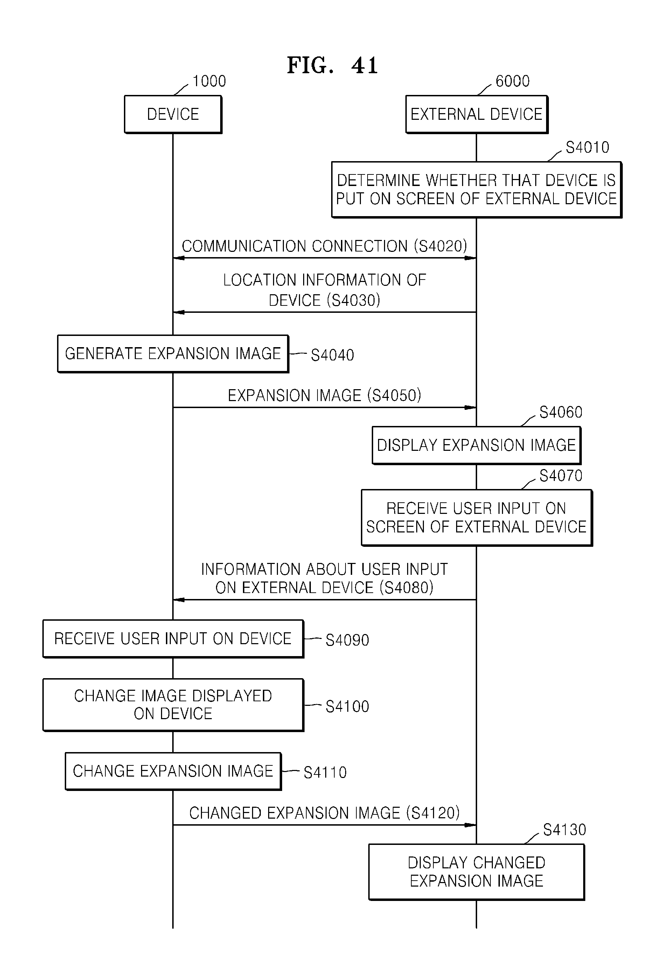

FIG. 41 is a flowchart of a method of displaying an expansion image related to an image displayed on a device, on an external device in an expansion image providing system, according to another embodiment of the present disclosure.

Referring to FIG. 41, in operation S4010, the external device 6000 determine whether the device 1000 is put or disposed on a screen of the external device 6000. The external device 6000 may determine whether the device 1000 is put or disposed on the screen of the external device 6000, by using a sensor included in the external device 6000. The external device 6000 may determine a location of the device 1000 that is put or disposed on the screen of the external device 6000, by using the sensor included in the external device 6000. The external device 6000 may determine a direction of the device 1000 that is put or disposed on the screen of the external device 6000, by using the sensor included in the external device 6000. The sensor may include, but is not limited to, for example, at least one of a touch sensor, a piezoelectric sensor, a proximity sensor, and any other similar and/or suitable sensor.

In operation S4020, the external device 6000 performs a communication connection so that the external device 6000 is communicably connected to the device 1000. If it is determined that the device 1000 is put or disposed on the screen of the external device 6000, then the external device 6000 may request the device 1000 to be communicably connected. The device 1000 and the external device 6000 may be communicably connected to each other by using various communication methods. In this case, the external device 6000 may broadcast information for a communication connection to the device 1000. The communication method may include, but is not limited to, for example, Bluetooth, WiFi, or any other similar and/or suitable communication method.

In operation S4030, the external device 6000 provides location information of the device 1000 to the device 1000. The location information of the device 1000 is information about a location of the device 1000 that is disposed on the screen of the external device 6000, and may include, but is not limited to, for example, information about at least one of a size and resolution of the screen of the external device 6000, a direction of the device 1000 that is put on the screen of the external device 6000, a location of the device 1000, an area for displaying the expansion image on the screen of the external device 6000, and any other similar and/or suitable information.

In operation S4040, the device 1000 generates an expansion image. The expansion image is an image related to an image displayed on the screen of the device 1000, and may be an image that is not easily displayable on the screen of the device 1000 due to a small size of the screen of the device 1000. For example, if the image displayed on the device 1000 is a map image, then the expansion image may be a map image of an area around the map image displayed on the device 1000. Otherwise, if the image displayed on the device 1000 is one of a plurality of home pages of the device 1000, then the expansion image may include the other home pages of the device 1000. Otherwise, if the image displayed on the device 1000 is a predetermined web page, then other web pages, which are linked to predetermined objects included in the web page displayed on the device 1000, may be included in the expansion image. Otherwise, if the image displayed on the device 1000 is a predetermined page of a webtoon, then previous and next pages of the page displayed on the device 1000 may be included in the expansion image. However, the present disclosure is not limited thereto.

The device 1000 may determine a resolution of the expansion image in consideration of a size of the screen of the external device 6000 and a size of the device 1000, and may generate the expansion image at the determined resolution.

The device 1000 provides the expansion image to the external device 6000 in operation S4050, and the external device 6000 displays the expansion image in operation S4060. The external device 6000 may determine a display location and direction of the expansion image on the external device 6000 based on the location and direction of the device 1000 on the external device 6000. The external device 6000 may display the expansion image based on the determined display location and direction. Accordingly, the external device 6000 may display the expansion image around the device 1000 in such a way that the expansion image is continued from the image displayed on the device 1000.

Although the external device 6000 determines the display location and direction of the expansion image in the above description, the present disclosure is not limited thereto. The device 1000 may determine the display location and direction of the expansion image, and may provide information about the display location and direction of the expansion image to the external device 6000.

In operation S4070, a user input on the screen of the external device 6000 is received. A user may make a touch input on the screen of the external device 6000 on which the expansion image is displayed, and the external device 6000 may sense the touch input of the user. The touch input may include, but is not limited to, for example, a tap, a long tap, a drag, a flick, or a pinch.

In operation S4080, the external device 6000 provides information about the user input on the external device 6000 to the device 1000.

In operation S4090, the device 1000 receives a user input on the device 1000. The user input on the device 1000 may include at least one of a touch input on the screen of the device 1000 and an input for moving the device 1000. The touch input on the screen of the device 1000 may include, but is not limited to, for example, a tap, a long tap, a drag, a flick, or a pinch. The input for moving the device 1000 may include at least one of an input for changing a location of the device 1000 on the external device 6000, an input for rotating the device 1000 on the external device 6000, and an input for tilting the device 1000 on the external device 6000.

In operation S4100, the device 1000 changes the image displayed on the device 1000 and, in operation ] S4110, the device 1000 changes the image displayed on the expansion image. Operations S4100 and S4110 are similar to operations S450 and S460 of FIG. 4, and thus detailed descriptions thereof are not provided.

The device 1000 provides the changed expansion image to the external device 6000 in operation S4120, and the external device 6000 displays the changed expansion image in operation S4130.

If the device 1000 is put or disposed on the external device 6000, in the same manner that the expansion image is displayed on the plate in FIGS. 5 through 36, then the expansion image may be displayed on the external device 6000.

Although the device 1000 generates the expansion image and changes the image displayed on the device 1000 and the generated expansion image in FIG. 41, the present disclosure is not limited thereto.

If the device 1000 provides, to the external device 6000, information about the image displayed on the screen of the device 1000, then the external device 6000 may generate the expansion image. For example, if a predetermined map image is displayed on the screen of the device 1000, then the device 1000 may provide, to the external device 6000, information about the map image displayed on the screen of the device 1000. In this case, the information about the map image may include location information of the map image displayed on the screen of the device 1000, for example, a GPS value, a latitude value, and a longitude value, and a resolution of the map image. The external device 6000 may generate an expansion map image around the map image displayed on the device 1000, based on the location information of the map image and the resolution of the map image. The external device 6000 may receive, from a separate map information providing server (not shown), the expansion map image around the map image displayed on the device 1000. The external device 6000 may generate the expansion image based on the location information of the device 1000.

The external device 6000 may change the image displayed on the device 1000 and the expansion image. In this case, the external device 6000 may receive information about the user input on the device 1000 and information about the image displayed on the device 1000 from the device 1000. The external device 6000 may change the image displayed on the device 1000 and the expansion image based on the user input on the device 1000 and the user input on the external device 6000. For example, if a map image is displayed on the screen of the device 1000, then the external device 6000 may change the map image displayed on the device 1000 and a map image included in the expansion image, based on the user input on the device 1000 and the user input on the external device 6000.

Various embodiments of the present disclosure may be implemented in the form of a non-transitory medium including computer-executable commands, e.g., a computer-executable program module. A non-transitory computer-readable medium may be an arbitrary medium that may be accessed by a computer, and includes volatile and nonvolatile media, and detachable and non-detachable media. Also, the non-transitory computer-readable medium may include a computer recording medium and a communication medium. The non-transitory computer recording medium includes volatile and nonvolatile media, and detachable and non-detachable media that are embodied by using an arbitrary method or technology for storing information such as a computer-readable command, a data structure, a program module, or other data. The communication medium typically includes a computer-readable command, a data structure, a program module, or other transmission mechanisms, and includes an arbitrary information transmission medium.

The present disclosure may, however, be embodied in many different forms and should not be construed as being limited to the various embodiments set forth herein; rather, these various embodiments are provided so that this disclosure will be thorough and complete, and will fully convey the inventive concept to those of ordinary skill in the art. For example, a single component may be separated into a plural of components, and a plurality of components may be combined into one component.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of providing a second image that is related to a first image displayed on a device, the method comprising:
receiving a request for the second image that is related to the first image displayed on a screen of the device, from a server; and
providing the second image to the server in response to the request,
wherein the second image is projected, onto a plate on which the device is disposed, by a projection apparatus connected to the server, and
wherein the first image displayed on the screen of the device is a part of a whole image related to the first image displayed on the screen of the device, and
wherein the second image comprises another part of the whole image.

2. The method of claim 1, wherein the server determines whether the device is disposed on the plate based on an image captured by a photographing apparatus connected to the server, and
wherein the receiving of the request for the second image comprises receiving the request from the server if the device is disposed on the plate.

3. The method of claim 3, further comprising:
changing the first image based on at least one of a user input on the second image and a user input on the device;
changing the second image based on at least one of the user input on the second image and the user input on the device; and
providing the changed second image to the server.

4. The method of claim 3, wherein an image of a touch, of a user, on the second image projected onto the plate is captured by the photographing apparatus, and
wherein the user input on the second image is determined based on the captured image of the touch of the user.

5. The method of claim 3, wherein the user input on the device comprises at least one of a touch input of a user on the screen of the device, a user input for changing a location of the device on the plate, a user input for rotating the device on the plate, and a user input for tilting the device.

6. The method of claim 3, wherein at least one of the first image and the second image is reduced or enlarged based on at least one of the user input on the second image and the user input on the device.

7. The method of claim 3, wherein, if a location of the device on the plate is changed, then a projection location of the second image is changed.

8. The method of claim 3, wherein, if a location of the device on the plate is changed, then another part of the whole image is displayed as the first image.

9. The method of claim 3, wherein, if the device is rotated on the plate, then a projection direction of the second image is changed.

10. The method of claim 3, wherein, if the device is tilted on the plate, then at least one object, which is displayed on the first image, disappears from the first image, and the disappeared object is displayed on the second image.

11. The method of claim 1, wherein the first image is an image of one of a plurality of home pages of the device, and
wherein the second image comprises images of the other home pages.

12. The method of claim 11, wherein, if the device is tilted, then all of the plurality of home pages of the device are displayed on the second image, and
wherein objects displayed on the plurality of home pages displayed on the second image are moved from among the plurality of home pages based on a user input on the second image.

13. The method of claim 11, wherein the second image comprises a temporary area used to edit the plurality of home pages.

14. The method of claim 1, wherein the whole image is a map image, wherein the first image is an image of a part of the map image, and
wherein the second image comprises an image of another part of the map image.

15. A device comprising:
a memory configured to store at least one program; and
a processor configured to provide an expansion image to a server by executing the at least one program,
wherein the at least one program is configured to:
receive a request for a second image that is related to a first image displayed on a screen of the device, from the server; and
provide the second image to the server in response to the request,
wherein the second image is projected, onto a plate on which the device is disposed, by a projection apparatus connected to the server,
wherein the first image displayed on the screen of the device is a part of a whole image related to the first image displayed on the screen of the device, and
wherein the second image comprises another part of the whole image.
